# EUROPEAN PATENT SPECIFICATION

(11) **EP 4 539 573 B1**
(45) Date of publication and mention of the grant of the patent: **07.10.2026**
(21) Application number: 23923802.5
(22) Date of filing: 28.11.2023
(51) Int. Cl.: H04L 5/00, H04L 5/14, H04W 72/232, H04W 72/566, H04W 72/0446

(54) **TIME-DOMAIN RESOURCE MANAGEMENT METHOD, AND ELECTRONIC DEVICE AND SYSTEM**
VERFAHREN ZUR VERWALTUNG VON ZEITBEREICHSRESSOURCEN SOWIE ELEKTRONISCHE VORRICHTUNG UND SYSTEM
PROCÉDÉ DE GESTION DE RESSOURCE DE DOMAINE TEMPOREL, DISPOSITIF ÉLECTRONIQUE ET SYSTÈME

(30) Priority: 25.02.2023 CN 202310208095
(43) Date of publication of application: 16.04.2025
(73) Proprietor: Honor Device Co., Ltd., Shenzhen, Guangdong 518040 (CN)
(72) Inventor: SUN, Xiaoyu, Shenzhen, Guangdong 518040 (CN)
(74) Representative: Goddar, Heinz J.
(86) International application number: PCT/CN2023/134634
(87) International publication number: WO 2024/174639

(56) References cited:
- EP-A1- 3 316 659
- WO-A1-2022/061651
- CN-A- 102 958 042
- CN-A- 104 113 937
- US-A1- 2022 400 528

## Description

### TECHNICAL FIELD

This application relates to the communication field, and in particular, to a time domain resource management method, an electronic device, and a computer-readable storage medium.

### BACKGROUND

Currently, two subscriber identity modules (subscriber identity module, SIM) may be usually installed on a terminal device that supports two cards. The two SIM cards can access a mobile communication network at the same time, to send data and receive services. When the terminal device is configured with only one radio frequency transmit channel (which may also be referred to as an uplink channel), the two SIM cards may transmit signals to a base station through a same radio frequency transmit channel in different time periods in a time division multiplexing (time division multiplexing, TDM) manner. However, in this process, if a SIM card that runs a high-priority service occupies the uplink channel in a specific slot, a SIM card that runs a low-priority service cannot use the uplink channel in a long time period that the slot is in, regardless of whether the SIM card uses the uplink channel to transmit a signal to the base station. Consequently, this may cause problems that idle time of the uplink channel is long and use efficiency of the uplink channel is low.

EP 3316659 A1 describes a management method for supporting multiple SIM cards to share an RF processor, wherein the method comprises: receiving a resource request sent by a first baseband communications processor, wherein the first baseband communications processor is configured to implement a first communications service on a first SIM card, the resource request is used to request, in response to the first communications service, a permission to use the RF processor, and the resource request comprises a type of the first communications service and a time period required for using the RF processor; determining whether the RF processor is authorized for a second baseband communications processor to perform a second communications service on a second SIM card in at least a part of the time period; when the RF processor is authorized for the second baseband communications processor to perform the second communications service in at least the part of the time period, comparing whether a priority of the type of the first communications service is higher than a priority of a type of the second communications service; and when the priority of the type of the first communications service is higher than the priority of the type of the second communications service, sending a first authorization message to the first baseband communications processor and instructing the second baseband communications processor to stop performing the second communications service, wherein the first authorization message is used to authorize the first baseband communications processor to use the RF processor to perform the first communications service.

### SUMMARY

This application provides a time domain resource management method, an electronic device, and a system. When a SIM card 1 that runs a high-priority service occupies an uplink channel to send uplink data to a base station 10 in a specific slot, if the SIM card 1 does not occupy, in another slot, the uplink channel to send the uplink data to the base station 10 in a specified time period that the slot is in, a UE 30 may enable a SIM card 2 to occupy the uplink channel to send uplink data to a base station 20. In this way, idle time of the uplink channel can be reduced, and use efficiency of the uplink channel can be improved.
The invention is defined by the independent claims. Advantageous embodiments of the invention are given by the dependent claims.

According to a first aspect, this application provides a time domain resource management method, applied to an electronic device. The electronic device supports two SIM cards, the electronic device is configured with only one radio frequency transmit channel, and the method includes: The electronic device receives first time domain resource configuration information sent by a first access network device, where the first time domain resource configuration information is used by the first access network device to configure a slot format of a first time domain resource for a first SIM card. The electronic device receives second time domain resource configuration information sent by a second access network device, where the second time domain resource configuration information is used by the second access network device to configure a slot format of a second time domain resource for a second SIM card. The electronic device sends, in a first slot of the first time domain resource, uplink data to the first access network device corresponding to the first SIM card. The electronic device sends, in the second slot of the second time domain resource, the uplink data to the second access network device corresponding to the second SIM card, where the electronic device transmits a high-priority service in the first slot, and transmits a low-priority service in the second slot, the second slot is in a first time period and is after the first slot, the first time period is a time period in which the first slot is used as a start time point and duration is specified duration, and the specified duration is less than or equal to duration of one radio frame. In this way, idle time of an uplink channel can be reduced, and use efficiency of the uplink channel can be improved.

In a possible implementation, the specified duration is duration of half a radio frame.

In a possible implementation, the first slot and the second slot are separated by time of one slot.

In a possible implementation, before that the electronic device sends, in the second slot of the second time domain resource, the uplink data to the second access network device corresponding to the second SIM card, the method further includes: The electronic device switches the radio frequency transmit channel to a network corresponding to the second SIM card for occupation at a time point that a previous slot of the second slot is in when the radio frequency transmit channel is occupied by a network corresponding to the first SIM card.

In a possible implementation, before that the electronic device switches the radio frequency transmit channel to a network corresponding to the second SIM card for occupation at a time point that a previous slot of the second slot is in when the radio frequency transmit channel is occupied by a network corresponding to the first SIM card, the method further includes: The electronic device determines whether to perform the switching operation of the radio frequency transmit channel. In this way, decision on whether the uplink channel can be switched is performed, and the uplink channel cannot be switched if the condition is not met, so that power consumption of the electronic device can be reduced.

In a possible implementation, that the electronic device determines whether to perform the switching operation of the radio frequency transmit channel includes: The electronic device determines, in time that the previous slot of the second slot is in, whether to perform the switching operation of the radio frequency transmit channel.

In a possible implementation, that the electronic device determines whether to perform the switching operation of the radio frequency transmit channel specifically includes: The electronic device determines, in time that a current slot of the second time domain resource is in, whether a next slot of the current slot is an uplink slot or a flexible slot. When the electronic device determines that the next slot of the current slot is the uplink slot or the flexible slot, the electronic device determines whether UL grant information corresponding to the next slot of the current slot is received. When the electronic device determines that the UL grant information corresponding to the next slot of the current slot is received, the electronic device determines whether the radio frequency transmit channel is occupied by the network corresponding to the first SIM card, whether the electronic device sends the uplink data via the first SIM card in the time that the current slot is in, and whether the electronic device sends the uplink data via the first SIM card in time that the next slot of the current slot is in. In this way, decision on whether the uplink channel can be switched is performed, and the uplink channel cannot be switched if the condition is not met, so that power consumption of the electronic device can be reduced.

In a possible implementation, that the electronic device determines whether to perform the switching operation of the radio frequency transmit channel includes: The electronic device determines, in each incoming slot, whether to perform the switching operation of the radio frequency transmit channel.

In a possible implementation, time of the first slot is adj acent to time of the second slot.

In a possible implementation, that the electronic device sends, in a second slot of the second time domain resource, uplink data to the second access network device corresponding to the second SIM card specifically includes: When the electronic device determines not to send the uplink data in a third slot of the first resource, the electronic device switches the radio frequency transmit channel. The electronic device sends, in the second slot of the second time domain resource, the uplink data to the second access network device corresponding to the second SIM card, where the time of the second slot is the same as time of the third slot. In this way, switching time of the uplink channel is shortened, and this helps improve efficiency of the electronic device in sending the uplink data.

In a possible implementation, time occupied by the electronic device to switch the radio frequency transmit channel is a guard interval between a last symbol in the first slot and a first symbol in the third slot.

In a possible implementation, time occupied by the electronic device to switch the radio frequency transmit channel is first N symbols in the second slot; and that the electronic device sends, in the second slot of the second time domain resource, the uplink data to the second access network device corresponding to the second SIM card specifically includes: the electronic device sends, on last (14-N) symbols in the second slot, the uplink data to the second access network device corresponding to the second SIM card, where N is less than 14.

In a possible implementation, before that the electronic device sends, in a first slot of the first time domain resource, uplink data to the first access network device corresponding to the first SIM card, the method further includes: The electronic device obtains a time point at which there are two adjacent downlink slots in the first time domain resource, and a second downlink slot corresponds to an uplink slot in the second time domain resource; and/or a time point at which there are two adjacent downlink slots in the first time domain resource, and a second downlink slot corresponds to a flexible slot in the second time domain resource; and/or a time point at which the first time domain resource is a non-uplink symbol in a flexible slot, and the second time domain resource is a symbol in an uplink slot; and/or a time point at which the first time domain resource is a non-uplink symbol in a flexible slot, and the second time domain resource is an uplink symbol in the flexible slot; the electronic device stores the obtained time point as a first index; and that the electronic device sends, in a second slot of the second time domain resource, uplink data to the second access network device corresponding to the second SIM card specifically includes: when the electronic device determines that a time point that the second slot is in exists in the first index, the electronic device sends, in the second slot of the second time domain resource, the uplink data to the second access network device corresponding to the second SIM card. In this way, efficiency of the electronic device in sending the uplink data can be improved by determining, based on an index, whether to perform uplink channel switching.

According to a second aspect, this application provides a time domain resource management method, applied to an electronic device. The electronic device supports two SIM cards, the electronic device is configured with only one radio frequency transmit channel, and the method includes: The electronic device receives first time domain resource configuration information sent by a first access network device, where the first time domain resource configuration information is used by the first access network device to configure a slot format of a first time domain resource for a first SIM card. The electronic device receives second time domain resource configuration information sent by a second access network device, where the second time domain resource configuration information is used by the second access network device to configure a slot format of a second time domain resource for a second SIM card. The electronic device sends on one or more uplink symbols in a fourth slot in the first time domain resource, uplink data to the first access network device corresponding to the first SIM card, and the electronic device sends, on one or more uplink symbols in a fifth slot in the second time domain resource, uplink data to the second access network device corresponding to the second SIM card, where time of the fourth slot is the same as time of the fifth slot, and time of the one or more uplink symbols in the fourth slot is different from time of the one or more uplink symbols in the fifth slot; and the electronic device transmits a high-priority service in the fourth slot, and transmits a low-priority service in the fifth slot. In this way, idle time of an uplink channel can be reduced, and use efficiency of the uplink channel can be improved.

In a possible implementation, switching time of the radio frequency transmit channel is one or more symbols. In this way, switching time of the uplink channel is shortened, and this helps improve efficiency of the electronic device in sending the uplink data.

In a possible implementation, switching time of the radio frequency transmit channel is a guard interval between symbols. In this way, switching time of the uplink channel is shortened, and this helps improve efficiency of the electronic device in sending the uplink data.

According to a third aspect, this application provides a chip or a chip system. The chip or the chip system includes a processing circuit and an interface circuit. The interface circuit is configured to receive code instructions and transmit the code instructions to the processing circuit, and the processing circuit is configured to execute the code instructions to perform the method according to any possible implementation of any one of the foregoing aspects. In this way, idle time of an uplink channel can be reduced, and use efficiency of the uplink channel can be improved.

According to a fourth aspect, this application provides an electronic device. The electronic device includes one or more processors, one or more memories, a modem modem, a radio frequency transmit path, a first SIM card, and a second SIM card. The one or more memories are coupled to the modem, the one or more memories are configured to store computer program code, and the computer program code includes computer instructions; and when the modem executes the computer instructions, the electronic device is enabled to perform the method according to any possible implementation of any one of the foregoing aspects. In this way, idle time of an uplink channel can be reduced, and use efficiency of the uplink channel can be improved.

According to a fifth aspect, this application provides a computer-readable storage medium. The computer-readable storage medium includes computer instructions; and when the computer instructions are run on an electronic device, the electronic device is enabled to perform the method according to any possible implementation of any one of the foregoing aspects. In this way, idle time of an uplink channel can be reduced, and use efficiency of the uplink channel can be improved.

### BRIEF DESCRIPTION OF DRAWINGS

FIG. 1A is a schematic diagram of an architecture of a communication system according to an embodiment of this application;
FIG. 1B is a schematic diagram of a specified time period range according to an embodiment of this application;
FIG. 1C is a schematic diagram of another specified time period range according to an embodiment of this application;
FIG. 2A is a schematic diagram of a structure of a radio frame according to an embodiment of this application;
FIG. 2B is a schematic diagram of a slot structure configuration according to an embodiment of this application;
FIG. 2C is a schematic diagram of a slot allocation ratio in one periodicity according to an embodiment of this application;
FIG. 3A is a schematic diagram of an unconfigured time domain resource according to an embodiment of this application;
FIG. 3B is a schematic diagram of a time domain resource configuration according to an embodiment of this application;
FIG. 3C is a schematic diagram of another time domain resource configuration according to an embodiment of this application;
FIG. 4A is a schematic diagram of a specific procedure of a time domain resource management method according to an embodiment of this application;
FIG. 4B is a schematic diagram of a slot format in a time domain resource according to an embodiment of this application;
FIG. 4C is a schematic diagram of a slot format in another time domain resource according to an embodiment of this application;
FIG. 4D is a schematic diagram of uplink channel switching according to an embodiment of this application;
FIG. 4E is another schematic diagram of uplink channel switching according to an embodiment of this application;
FIG. 4F is another schematic diagram of uplink channel switching according to an embodiment of this application;
FIG. 4G is another schematic diagram of uplink channel switching according to an embodiment of this application;
FIG. 4H is another schematic diagram of uplink channel switching according to an embodiment of this application;
FIG. 4I is another schematic diagram of uplink channel switching according to an embodiment of this application;
FIG. 4J is another schematic diagram of uplink channel switching according to an embodiment of this application;
FIG. 5 is a schematic diagram of a structure of a communication apparatus according to an embodiment of this application; and
FIG. 6 is a schematic diagram of a structure of a network apparatus according to an embodiment of this application.

### DESCRIPTION OF EMBODIMENTS

Terms used in the following embodiments of this application are only intended to describe particular embodiments, and are not intended to limit this application. As used in the specification and the accompanying claims of this application, terms "one", "a", "the", "the foregoing", "such a", and "this" of singular expression forms are also intended to include plural forms, unless otherwise explicitly indicated in the context. It should be further understood that, as used in this application, the term "and/or" indicates and includes any and all possible combinations of one or more of the listed items. In embodiments of this application, the terms "first" and "second" are merely intended for a purpose of description, and shall not be understood as implying relative importance or implicitly indicating a quantity of indicated technical features. Therefore, a feature defined to be "first" or "second" may explicitly or implicitly include one or more features. In the descriptions of embodiments of this application, unless otherwise stated, "a plurality of" means two or more than two.

First, a communication system provided in embodiments of this application is described.

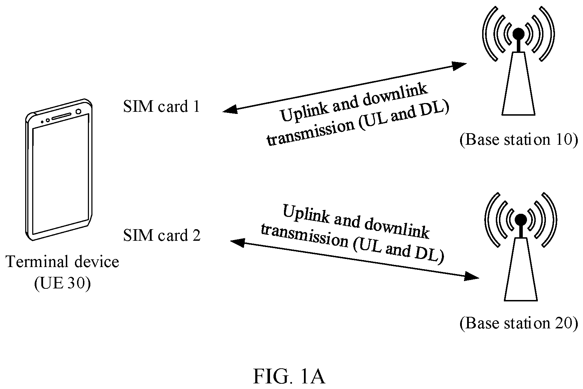

FIG. 1A shows an example of a schematic diagram of an architecture of a communication system according to an embodiment of this application.

As shown in FIG. 1A, the communication system may include one or more access network devices and one or more terminal devices connected to the access network device. FIG. 1A shows an example of two access network devices (for example, a base station 10 and a base station 20) and one terminal device (a UE 30). It may be understood that FIG. 1A is merely a schematic diagram, and does not constitute a limitation on an applicable scenario of the technical solutions provided in this application.

The access network device may be a transmission reception point (transmission reception point, TRP), a base station, a relay station, a node, an access point, or the like. The access network device may be an access network device in a 5G communication system or an access network device in a future evolved network. The access network device may be a base transceiver station (base transceiver station, BTS) in a global system for mobile communication (global system for mobile communication, GSM) or code division multiple access (code division multiple access, CDMA) network, or may be a NodeB (NodeB, NB) in wideband code division multiple access (wideband code division multiple access, WCDMA), or may be an evolved NodeB (evolutional NodeB, eNB) in long term evolution (long term evolution, LTE), or may be a gNodeB (gNodeB, gNB) in new radio (new radio, NR). Alternatively, the access network device may be a wireless controller in a cloud radio access network (cloud radio access network, CRAN) scenario. In embodiments of this application, the base stations (for example, the base station 10 and the base station 20) are used as examples subsequently to describe the technical solutions provided in this application.

The terminal device may be a user equipment (user equipment, UE), an access terminal, a UE unit, a UE station, a mobile station, a mobile console, a remote station, a remote terminal, a mobile device, a UE terminal, a wireless communication device, a UE proxy, or a UE apparatus. The access terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved public land mobile network (public land mobile network, PLMN), or the like. In embodiments of this application, the user equipment UE (for example, the UE 30) is used as an example subsequently to describe the technical solutions provided in this application.

In embodiments of this application, the base station 10 and the base station 20 shown in FIG. 1A may be base stations in an LTE/NR communication system. The base station 10 and the base station 20 may include a carrier of a low frequency band, for example, a carrier of a B28/n28 frequency band. The base station 10 and the base station 20 may also include a carrier of a high frequency band, for example, a carrier of an n41 frequency band. The UE 30 may perform, by using the carrier of the B28/n28 frequency band or the carrier of the n41 frequency band, uplink transmission with the base station 10 and the base station 20 (to be specific, the UE 30 transmits signals to the base station 10 and the base station 20, that is, the UE 30 sends uplink data, uplink, UL) and downlink transmission with the base station 10 and the base station 20 (to be specific, the base station 10 and the base station 20 transmit signals, downlink, DL, to the UE 30). A link used by the UE 30 to perform uplink transmission with the base station 10 and the base station 20 may be referred to as an uplink, and a link used by the UE 30 to perform downlink transmission with the base station 10 and the base station 20 may be referred to as a downlink.

In embodiments of this application, two subscriber identity modules (subscriber identity module, SIM) may be disposed in the UE 30 shown in FIG. 1A, which are respectively a SIM card 1 and a SIM card 2. When one of the two SIM cards runs a high-priority service (for example, a voice call service) with a high real-time requirement, the other card may run a low-priority service (for example, a web browsing service) with a low real-time requirement. For example, when the SIM card 1 runs the high-priority service with a high real-time requirement in a time period A, the SIM card 2 may run the low-priority service with a low real-time requirement. When the SIM card 2 may run the high-priority service with a high real-time requirement in a time period B, the SIM card 1 may run the low-priority service with a low real-time requirement. That is, the SIM card that runs the high-priority service and the SIM card that runs the low-priority service may change. This is not limited in this application.

In subsequent embodiments, an example in which the SIM card 1 runs the high-priority service, and the SIM card 2 runs the low-priority service is used for description.

The UE 30 may communicate with the base station 10 via the SIM card 1, and the UE 30 may communicate with the base station 20 via the SIM card 2. For the UE 30 that uses the SIM card 1 and uses the SIM card 2, communication may be performed in a dual SIM and dual active (dual SIM and dual active, DSDA) manner. In this communication manner, the two SIM cards may simultaneously perform communication services. When the UE 30 is configured with only one radio frequency transmit channel (which may also be referred to as an uplink channel), the two SIM cards may transmit signals to a base station through a same radio frequency transmit channel in different time periods in a time division multiplexing manner. In this case, a mode that the two SIM cards are in may be referred to as a time division duplexing (time division duplexing, TDD) mode. The foregoing mode of sharing a set of radio frequency transmit channels by using the time division multiplexing technology is also referred to as a radio frequency sharing mode.

However, in the radio frequency sharing mode, if the SIM card 1 that runs the high-priority service occupies an uplink channel in a specific slot to send uplink data to the base station 10, the SIM card 2 that runs the low-priority service cannot use the uplink channel in a long time period that the slot is in, regardless of whether the SIM card 1 uses the uplink channel to transmit a signal to the base station 10 in another slot. Consequently, this may cause problems that idle time of the uplink channel is long and use efficiency of the uplink channel is low.

Therefore, an embodiment of this application provides a time domain resource management method.

In the time domain resource management method, when a SIM card 1 that runs a high-priority service occupies an uplink channel to send uplink data to a base station 10 in a specific slot, if the SIM card 1 does not occupy, in another slot, the uplink channel to send the uplink data to the base station 10 in a specified time period that the slot is in, a UE 30 may enable a SIM card 2 to occupy the uplink channel to send uplink data to a base station 20 in a specified time period that the slot is in.

In this way, switching time of the uplink channel is flexible, so that idle time of the uplink channel can be reduced, and use efficiency of the uplink channel can be improved. A specific implementation is described in detail in subsequent embodiments. Details are not described herein again.

The foregoing "specified time period that the slot is in" may have the following two cases:
1. A last slot in which the SMI card 1 sends the uplink data is used as a start time point, and duration is a time period of specified duration (for example, 8 milliseconds or 10 milliseconds). The specified duration in this embodiment of this application is described by using 10 milliseconds or 8 milliseconds as an example.

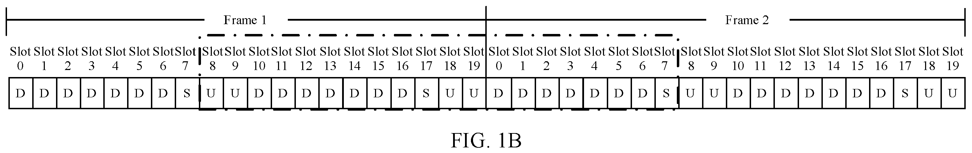

As shown in FIG. 1B, if a time domain resource configuration of the SIM card 1 is shown in FIG. 1B, the SIM card 1 occupies the uplink channel to send the uplink data in a slot slot 8 of a frame 1, and the slot 8 is a last slot in which the SMI card 1 sends the uplink data, "in the specified time period that the slot is in" means in 10 milliseconds of the frame 1 by using the slot 8 as a start time point, that is, in a time period from a slot 8 in a frame 1 to a slot 7 in a frame 2. Descriptions of the time domain resource are specifically described subsequently. Details are not described herein again.

2. The SMI card 1 sends the uplink data in a radio frame that an uplink slot is in.

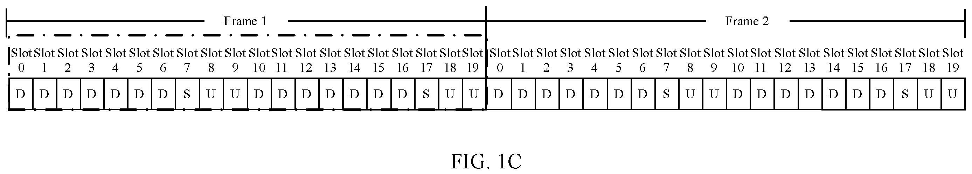

As shown in FIG. 1C, if the time domain resource configuration of the SIM card 1 is shown in FIG. 1B, and the SIM card 1 occupies the uplink channel to send the uplink data in a slot slot 8 in a frame 1, because the frame 1 includes the slot 8, "in the specified time period that the slot is in" is in the frame 1.

The following introduces a time domain resource structure that is provided in this embodiment of the this application and that can be used for uplink transmission on the SIM card.

In this embodiment of this application, a time domain resource may be a radio frame (which may be a frame for short), a slot, and a symbol that are used for uplink transmission and downlink transmission (UL and DL). The foregoing symbol may be an orthogonal frequency division multiplexing (Orthogonal Frequency Division Multiplexing, OFDM) symbol.

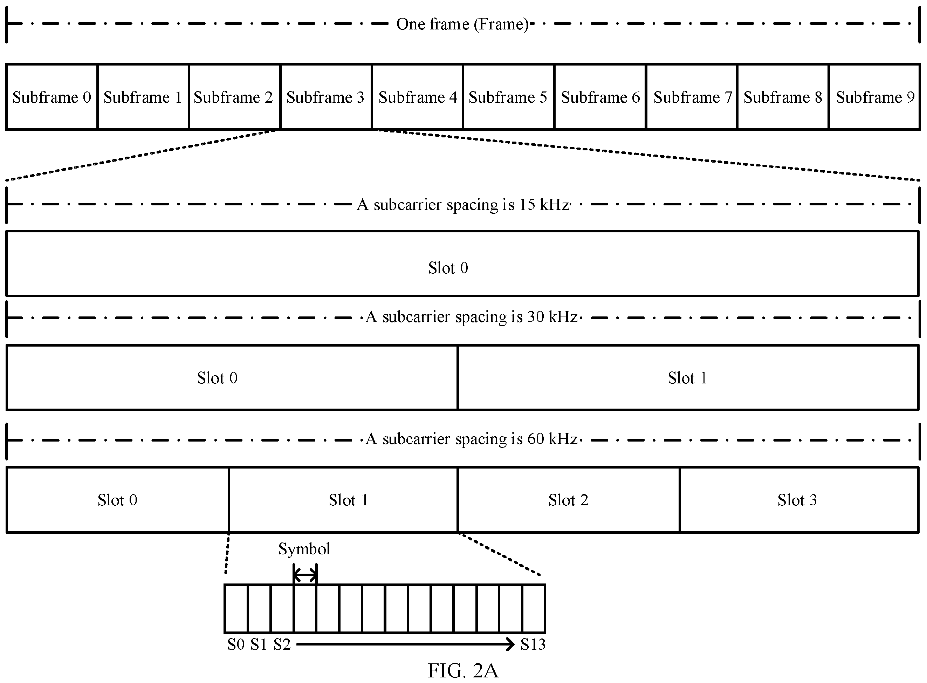

As shown in FIG. 2A, duration of one frame is generally 10 milliseconds (millisecond, ms).

One frame may usually include 10 subframes, which may be marked as a subframe 0 to a subframe 9 respectively.

One subframe may include one or more slots, and a quantity of slots is related to a subcarrier spacing. For example, when the subcarrier spacing is 15 kilohertz (kilohertz, KHz), one subframe may include one slot, which may be marked as a slot 0; when the subcarrier spacing is 30 kHz, one subframe may include two slots, which are marked as a slot 0 and a slot 1 respectively; or when the subcarrier spacing is 60 kHz, one subframe may include four slots, which are marked as a slot 0, a slot 1, a slot 2, and a slot 3 respectively. In subsequent embodiments, that the subcarrier spacing is 30 kHz, and one subframe includes two slots are described.

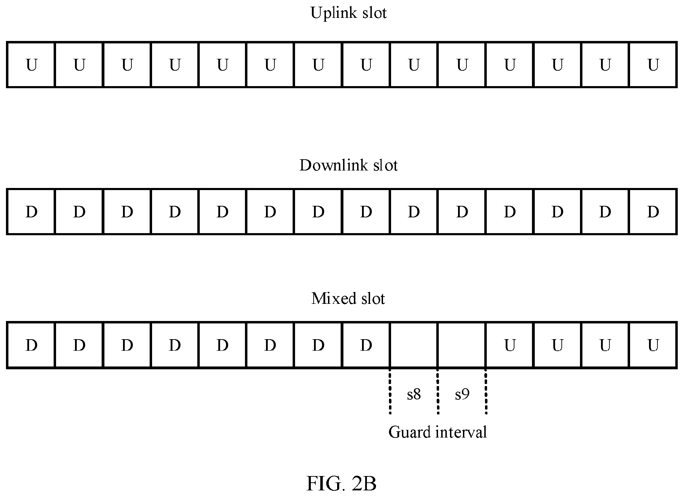

One slot may usually include 14 symbols (symbol), and the 14 symbols may be marked as s0 to s13 respectively. The symbol is a minimum unit of the time domain resource structure. The symbol may be an uplink symbol for uplink transmission, and the uplink symbol may be marked as "U"; or the symbol may be a downlink symbol for downlink transmission, and the downlink symbol may be marked as "D". Based on a ratio of an uplink symbol to a downlink symbol in a slot, a type of the slot may be divided into the following three types: an uplink slot, a downlink slot, and a flexible slot. As shown in FIG. 2B, the uplink slot may be marked as "U", and all 14 symbols in the uplink slot are uplink symbols; the downlink slot may be marked as "D", and all 14 symbols in the downlink slot are downlink symbols; and the flexible slot may be divided into a fully flexible slot and a mixed slot. 14 symbols in the fully flexible slot may all be used for uplink transmission and downlink transmission based on specific service scenarios, and may be used as guard intervals, reserved resources, or the like. The mixed slot includes at least one uplink symbol and/or downlink symbol. In the mixed slot shown in FIG. 2B, s0 to s7 are downlink symbols, s8 and s9 are guard intervals, and s10 to s13 are uplink symbols.

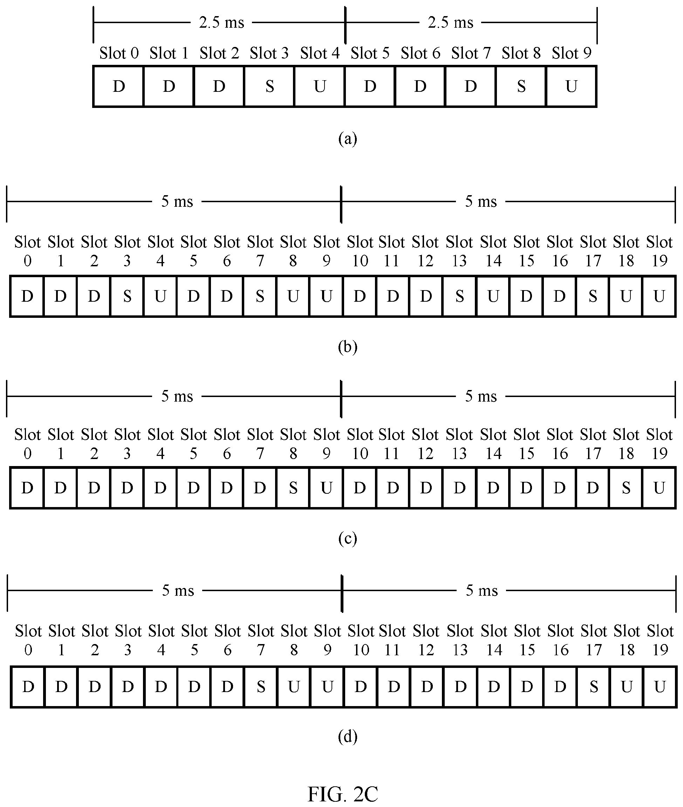

As shown in FIG. 2C, within one periodicity of specified duration (for example, 2.5 ms or 5 ms), different slot allocation ratios may be used in time domain based on a ratio relationship between the uplink slot, the downlink slot, and the flexible slot. The following describes several structures of slot allocation ratios by using examples.

As shown in (a) in FIG. 2C, 2.5 ms is used as one periodicity, and a slot allocation ratio may be downlink slot:flexible slot:uplink slot=3:1:1.

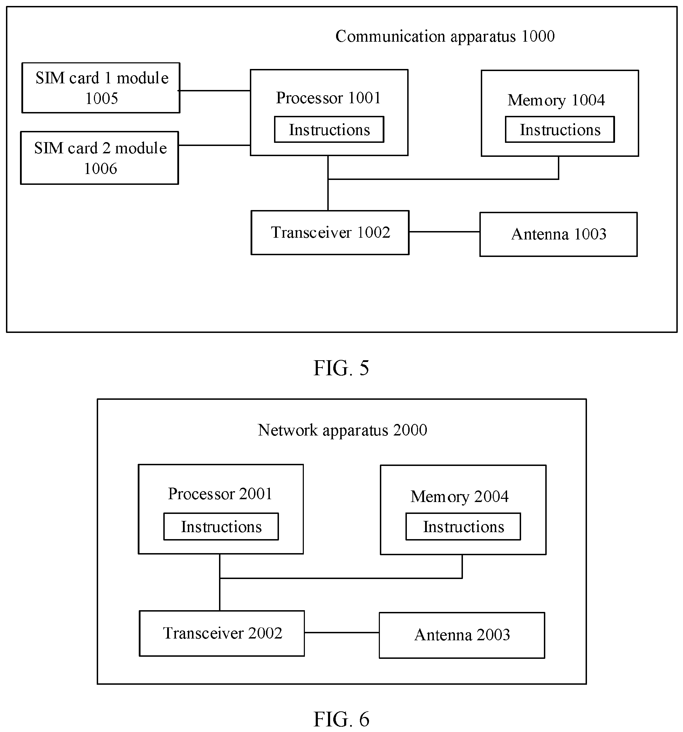

As shown in (b) in FIG. 2C, 5 ms is used as one periodicity, and a slot allocation ratio may be downlink slot:flexible slot:uplink slot=5:2:3.

As shown in (c) in FIG. 2C, 5 ms is used as one periodicity, and a slot allocation ratio may be downlink slot:flexible slot:uplink slot=8:1:1.

As shown in (d) in FIG. 2C, 5 ms is used as one periodicity, and a slot allocation ratio may be downlink slot:flexible slot:uplink slot=7:1:2.

It should be noted that the time domain resource structure described above is merely used for example interpretation of this application, and does not constitute a specific limitation on this application.

Next, the time domain resource configuration related in the time domain resource management method provided in embodiments of this application is described.

The time domain resource management method relates to a time domain resource configuration of a SIM card 1 by a base station 10 and a time domain resource configuration of a SIM card 2 by a base station 20, so that a UE 30 obtains a time domain resource configuration such as a slot allocation ratio in time domain or a symbol allocation ratio in the slot, and the UE 30 determines time in which each of the SIM card 1 and the SIM card 2 performs uplink and downlink transmission. The following describes the time domain resource configuration of the SIM card 1 by the base station 10.

In a time domain configuration framework provided in embodiments of this application, the time domain resource configuration may include a cell-level time domain resource configuration and a UE-level time domain resource configuration. "Cell" herein means a range in which a signal transmitted by the base station 10 can be covered.

The cell-level time domain resource configuration is that the base station 10 broadcasts time domain resource configuration information to the UE 30. Cell-level time domain resource configuration information has constraints on all UEs accessing the cell. Specifically, for any UE that applies for access to the base station 10, an uplink time domain resource (an uplink slot and an uplink symbol) and a downlink time domain resource (a downlink slot and a downlink symbol) of the UE are specified to first meet a requirement of the cell-level time domain resource configuration information.

The UE-level time domain resource configuration is a process in which the base station 10 further configures, in a semi-static or dynamic manner, an unconfigured time domain resource or a time domain resource configured as flexible in different service scenarios based on the cell-level time domain resource configuration information. In a UE-level time domain resource configuration process, the delivered time domain resource configuration information of the base station 10 may be UE-level time domain resource configuration information.

(1) Cell-level time domain resource configuration.

In some embodiments, an UL/a DL of the UE 30 corresponds to a time division duplex mode. In the foregoing scenario, the base station 10 may broadcast uplink and downlink time domain resource configuration information of the UE 30.

Specifically, the base station 10 may broadcast a system information block SIB 1 on a physical downlink shared channel (Physical Downlink Shared CHannel, PDSCH). The SIB 1 may include a cell-specific higher-layer parameter TDD-UL-DL-ConfigCommon. TDD-UL-DL-ConfigCommon may be referred to as the uplink and downlink time domain resource configuration information of the UE 30.

TDD-UL-DL-ConfigCommon may include a subcarrier spacing, duration of one periodicity, a plurality of uplink and downlink parameters, and the like. The uplink and downlink parameter includes an uplink parameter and a downlink parameter. The uplink parameter may be used to indicate a slot and/or a symbol used for uplink transmission. The downlink parameter may be used to indicate a slot and/or a symbol used for downlink transmission DL.

The uplink parameter may include a first uplink slot quantity and a first uplink symbol quantity. The first uplink slot quantity may be used to indicate a location and a quantity of uplink slots in a time domain resource. The first uplink symbol quantity may be used to indicate a location and a quantity of uplink symbols adjacent to the uplink slot.

The downlink parameter may include a first downlink slot quantity and a first downlink symbol quantity. The first downlink slot quantity may be used to indicate a location and a quantity of downlink slots in a time domain resource. The first downlink symbol quantity may be used to indicate a location and a quantity of downlink symbols adjacent to the downlink slot.

Specifically, for the uplink and downlink parameter, refer to Table 1 below:

**Table 1**

| Parameter | Meaning |
|---|---|
| nrofDownlinkSlots (first downlink slot quantity) | indicates a quantity of downlink slots calculated from front to back starting from a first slot |
| nrofDownlinkSymbols (first downlink symbol quantity) | indicates a quantity of downlink symbols calculated from a first symbol in a slot following a last downlink slot in nrofDownlinkSlots |
| nrofUplinkSlots (first uplink slot quantity) | indicates a quantity of uplink slots calculated from back to front starting from a last slot |
| nrofUplinkSymbols (first uplink symbol quantity) | indicates a quantity of uplink symbols calculated from back to front starting from a last symbol in a previous slot of a last uplink slot in nrofUplinkSlots |
| dl-UL-TransmissionPeriodicity (periodicity duration value) | indicates duration of one periodicity, where the value may be 0.625 ms, 1.25 ms, 2.5 ms, 5 ms, and 10 ms |
| ReferenceSubcarrierSpacing (reference subcarrier spacing) | indicates a frequency of a subcarrier spacing, where a value may be 15 kHz, 30 kHz, 60 kHz, or the like |

It may be learned from Table 1 above that all parameters in Table 1 are optional. As shown in Table 1, the foregoing periodicity duration value parameter indicates the duration of one periodicity. The foregoing reference subcarrier spacing parameter indicates the frequency of the subcarrier spacing. All or a part of the foregoing uplink and downlink parameters (which include nrofDownlinkSlots, nrofDownlinkSymbols, nrofUplinkSlots, and nrofUplinkSymbols) indicate types and quantities of slots (or symbols) in a slot set in one periodicity: uplink slots (or symbols) and downlink slots (or symbols).

For example, it is assumed that a value of a parameter in TDD-UL-DL-ConfigCommon is as follows:
ReferenceSubcarrierSpacing=30 kHz;
dl-UL-TransmissionPeriodicity=5ms;
nrofDownlinkSlots=2, and nrofDownlinkSymbols=3; and
nrofUplinkSlots=1, and nrofUplinkSymbols=3.

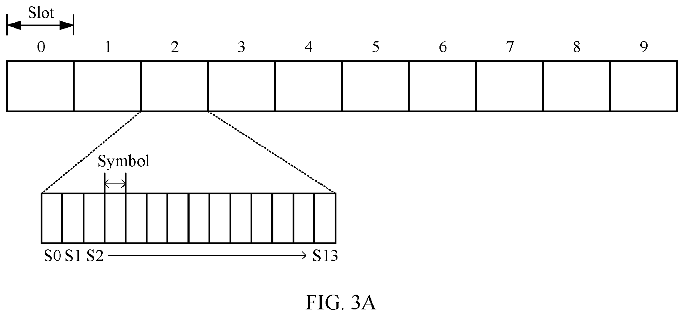

In this way, it may be learned from the foregoing parameters that a subcarrier spacing in the time domain resource configuration information is 30 kHz, and duration of one periodicity is 5 ms. Therefore, one periodicity includes 10 slots. FIG. 3A shows one slot set formed by the 10 slots. These 10 slots may be respectively marked as a slot 0, a slot 1, a slot 2, a slot 3, a slot 4, a slot 5, a slot 6, a slot 7, a slot 8, and a slot 9. Initially, all the 10 slots are not set. One slot (slot) may include 14 symbols. The 14 symbols may be respectively marked as s0 to s13.

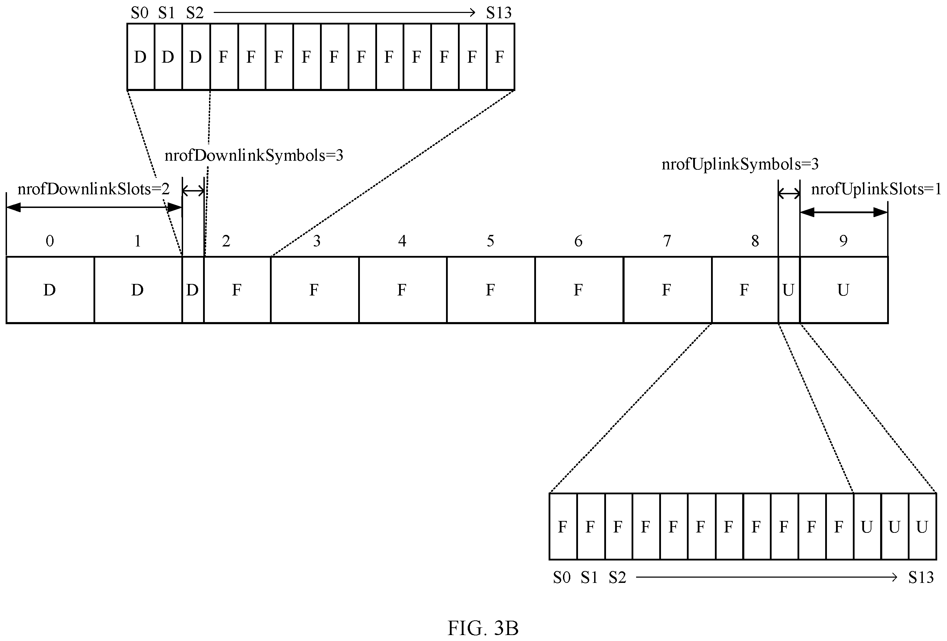

After the foregoing uplink and downlink parameters described by using examples are configured, the unconfigured time domain resource shown in FIG. 3A may be updated to the structure shown in FIG. 3B.

Specifically, a process of obtaining the time domain resource shown in FIG. 3B with reference to the meanings of the uplink and downlink parameters shown in Table 1 is as follows:
1. nrofDownlinkSlots=2 may indicate that in the 10 slots described in FIG. 3A, two slots that are calculated from backward starting from the slot 0 (the first slot) are downlink slots, that is, the slot 0 and the slot 1 are downlink slots (DL slots). In FIG. 3B, a slot (slot) marked as "D" is a DL slot.
2. nrofDownlinkSymbols=3 may indicate that in the slot 2 (a slot following the last downlink slot slot 1 in nrofDownlinkSlots), three symbols that are calculated backward starting from the first symbol are downlink symbols, that is, s0 to s2 are downlink symbols, namely, DL symbols. In FIG. 3B, a symbol (symbol) marked as "D" is a downlink symbol.
3. nrofUplinkSlots=1 may indicate that in the 10 slots described in FIG. 3A, one slot that is calculated forward starting from the slot 9 (the last slot) is an uplink slot, that is, the slot 9 is an uplink slot, namely, a UL slot. In FIG. 3B, a slot (slot) marked as "U" is a UL slot.
4. nrofUplinkSymbols=3 may indicate that in the slot 8 (a previous slot of the last uplink slot slot 9 in nrofUplinkSlots), three symbols that are calculated forward starting from the last symbol are uplink symbols, that is, s11 to s13 are uplink symbols, namely, UL symbols. In FIG. 3B, a symbol (symbol) marked as "U" is a UL symbol.

Remaining unconfigured slots and symbols may be marked as "F". In this case, the time domain resource shown in FIG. 3B is a time domain resource obtained after the cell-level time domain resource configuration information is configured.

Subsequently, the base station 10 may further configure the foregoing flexible time domain resource based on a specific requirement of a UE service scenario. In this case, the time domain resource configuration information delivered by the base station 10 is the UE-level time domain resource configuration information described above.

### (2) UE-level time domain resource configuration.

Generally, in a process in which the base station 10 specifies the uplink and downlink time domain resources applicable to the cell, the base station 10 reserves one or more flexible time domain resources (flexible slots and/or flexible symbols). At a cell level, the flexible time domain resource may be used for uplink or downlink. In other words, the flexible time domain resource may be a UL time domain resource, or may be a DL time domain resource. Subsequently, the base station 10 may further configure the foregoing flexible time domain resource based on a specific service scenario.

In the foregoing process, the time domain resource configuration information delivered by the base station 10 may be referred to as UE-level time domain resource configuration information. The UE-level time domain resource configuration information is sent by the base station 10 for a target UE. Different UEs accessing the base station 10 may receive different UE-level time domain resource configuration information. That is, the UE-level time domain resource configuration information meets a time domain resource configuration requirement of a cell accessed by the UE, and is personalized. Cell-level time domain resource configuration information of different UEs accessing a same cell is consistent.

In some embodiments, the base station 10 may deliver the UE-level time domain resource configuration information by using radio resource control (radio resource control, RRC) signaling. In some embodiments, the base station 10 may further deliver the UE-level time domain resource configuration information by using slot format indication (Slot Format Indication, SFI) signaling and downlink control information (downlink control information, DCI) signaling.

Specifically, the UE-level time domain resource configuration information may include a plurality of UE-level time domain resource configuration parameters. The UE-level time domain resource configuration parameter may be used to indicate that a flexible slot in a time domain resource is specifically a UL time domain resource or a DL time domain resource in a UE-level time domain resource configuration process.

The UE-level time domain resource configuration parameter may include a slot index slotIndex and a UE-level uplink and downlink parameter. The slot index may be used to indicate a configured flexible slot.

The UE-level uplink and downlink parameter may include a full DL indicator allDownlink, a full UL indicator allUplink, a quantity of DL symbols in a slot nrofDownlinkSymbols, and a quantity of UL symbols in a slot nrofUplinkSymbols.

allDownlink may be used to indicate that all symbols in one slot are DL symbols, and allUplink may be used to indicate that all symbols in one slot are UL symbols. nrofDownlinkSymbols may be used to indicate a location and a quantity of DL symbols in one slot, and nrofUplinkSymbols may be used to indicate a location and a quantity of UL symbols in one slot.

Specifically, Table 2 shows an example of the UE-level time domain resource configuration parameter.

**Table 2**

| Parameter | Meaning |
|---|---|
| slotIndex | Slot index |
| allDownlink (full DL indicator) | specifies all symbols in the slot indicated by slotIndex as DL symbols |
| allUplink (full UL indicator) | specifies all symbols in the slot indicated by slotIndex as UL symbols |
| nrofDownlinkSymbols (quantity of DL symbols in the slot) | The quantity of DL symbols calculated from front to back starting from the first symbol in the slot indicated by slotIndex |
| nrofUplinkSymbols (quantity of UL symbols in the slot) | The quantity of UL symbols calculated from back to front starting from the last symbol in the slot indicated by slotIndex |

For example, the flexible time domain resource shown in FIG. 3B is used as an example. The base station 10 may deliver the following UE-level time domain resource configuration information:
slotIndex=2, and allDownlink; and
slotIndex=3, and nrofDownlinkSymbols=3.

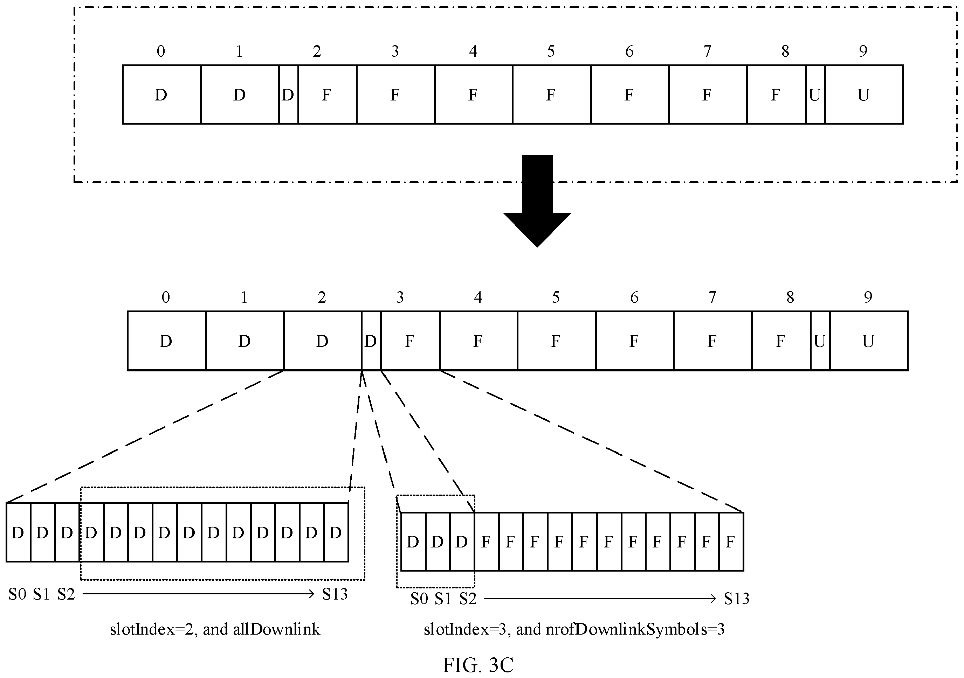

Therefore, the time domain resource shown in FIG. 3B may be further configured as the structure shown in FIG. 3C, and content in the dashed box is the foregoing time domain resource shown in FIG. 3B.

Specifically, a process of obtaining the time domain resource shown in FIG. 3C with reference to the meanings of the UE-level time domain resource configuration parameters shown in Table 2 is as follows:
1. When slotIndex=2, allDownlink indicates that a configurable flexible symbol in the slot 2 is set to a downlink symbol "D".
2. When slotIndex=3, nrofDownlinkSymbols=3 indicates that three symbols in the slot 3, namely, s0, s1, and s2, that are calculated from front to back starting from the first symbol, are set to downlink symbols "D".

One slot indicated by slotIndex may be a first flexible slot. For example, the slot indicated by slotIndex=2 may be a first flexible slot. The slot indicated by slotIndex=3 may also be referred to as a first flexible slot.

In some embodiments, on a basis of the cell-level time domain resource configuration information, the base station 10 may further configure a symbol in the flexible slot by using DCI signaling.

In a configuration manner by using the DCI signaling, one method is that the symbol in the flexible slot may be indicated based on a DCI format 2_0. In this method, the base station 10 and the UE 30 may preset a slot format table used by the DCI format 2_0. The slot format table may record formats of a plurality of slots, and a configuration of each symbol in one slot format is fixed. The base station 10 may indicate, by using a slot format number in the UE-level slot configuration information, a purpose of each symbol in the slot of the UE.

For example, Table 3 below shows a slot format table.

**Table 3**

| Format (slot format number) | Symbol number in a slot (symbol number in a slot) | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| ... | ... | ... | ... | ... | ... | ... | ... | ... | ... | ... | ... | ... | ... | ... |

It may be learned from Table 3 that when the slot format number is 0 (a format 0), symbols of the slot format number are configured as "DDDDDDDDDDDDDD"; when the slot format number is 1 (a format 1), symbols of the slot format number are configured as "UUUUUUUUUUUUUU"; when the slot format number is 2 (a format 2), symbols of the slot format number are configured as "FFFFFFFFFFFFFF"; and when the slot format number is 3 (a format 3), symbols of the slot format number are configured as "DDDDDDDDDDDDDF". In Table 3, remaining slot format numbers and symbol configurations corresponding to the remaining slot format numbers are deduced by analogy. The base station 10 may deliver the slot format number to the UE 30 to indicate a configuration of a symbol in a specific flexible slot. The configuration of the symbol in the flexible slot is the same as the configuration of the symbol corresponding to the delivered slot format number.

The following describes a specific procedure of the time domain resource management method according to embodiments of this application.

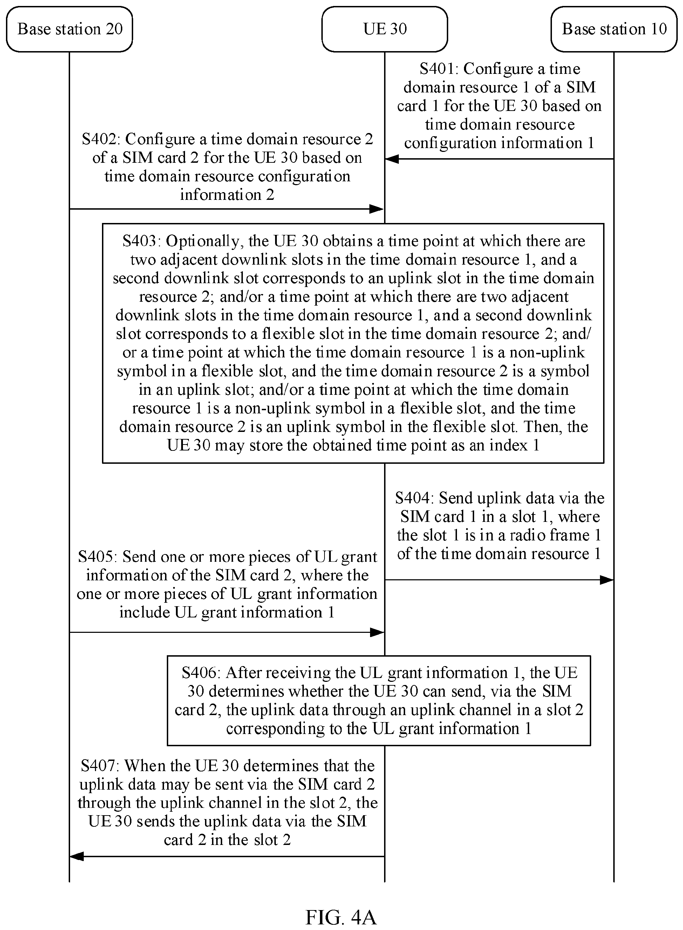

FIG. 4A shows an example of a schematic diagram of a specific procedure of a time domain resource management method according to an embodiment of this application. As shown in FIG. 4A, the specific procedure of the method may include the following steps.

S401: A base station 10 configures a time domain resource 1 of a SIM card 1 for a UE 30 based on time domain resource configuration information 1.

The time domain resource configuration information 1 may also be referred to as first time domain resource configuration information. The time domain resource configuration information 1 may be used to indicate one or more slots that are allocated by the base station 10 to the SIM card 1 in a radio frame of the time domain resource 1 (which may also be referred to as a first time domain resource). It should be noted that the time domain resource configuration information 1 herein may include cell-level time domain resource configuration information broadcast by the base station 10 to the UE 30 and/or UE-level time domain resource configuration information sent by the base station 10 to the UE 30. For a cell-level time domain resource configuration and a UE-level time domain resource configuration, refer to the foregoing descriptions.

Specifically, the base station 10 may broadcast and send the time domain resource configuration information 1 to the UE 30 by using cell-specific RRC signaling, UE-specific RRC signaling, UE-group SFI signaling, and UE-specific DCI signaling. The time domain resource configuration information 1 may be used by the UE 30 to determine locations and quantities of available uplink slots (symbols), downlink slots (symbols), and flexible slots in the radio frame of the time domain resource 1 of the SIM card 1. The UE 30 may perform uplink and downlink data transmission with the base station 10 based on the time domain resource 1 via the SIM card 1. Periodicity duration in the time domain resource 1 may be referred to as first periodicity duration. For example, if the periodicity duration in the time domain resource 1 is 5 ms, 5ms may be referred to as the first periodicity duration.

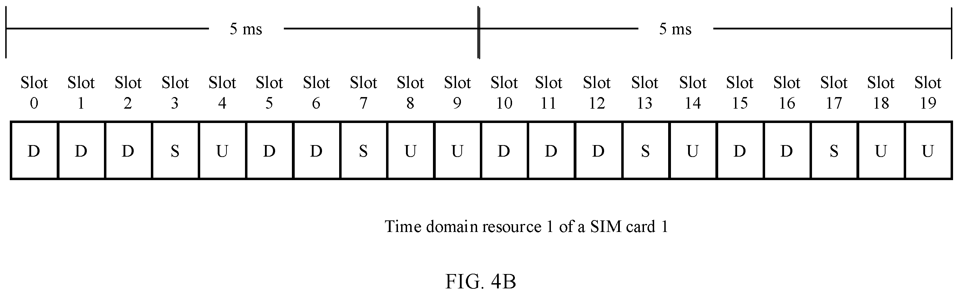

For example, the time domain resource 1 may be shown in FIG. 4B. The periodicity duration in the time domain resource 1 is 5ms. In one periodicity, an allocation ratio of downlink slots to flexible slots to uplink slots is 5:2:3.

S402: A base station 20 configures a time domain resource 2 of a SIM card 2 for the UE 30 based on time domain resource configuration information 2.

The time domain resource configuration information 2 may also be referred to as second time domain resource configuration information. The time domain resource configuration information 2 may be used to indicate one or more slots that are allocated by the base station 20 to the SIM card 2 in a radio frame of the time domain resource 2 (which may also be referred to as a second time domain resource). It should be noted that the time domain resource configuration information 2 herein may include cell-level time domain resource configuration information broadcast by the base station 20 to the UE 30 and/or UE-level time domain resource configuration information sent by the base station 20 to the UE 30. For a cell-level time domain resource configuration and a UE-level time domain resource configuration, refer to the foregoing descriptions.

Specifically, the base station 20 may broadcast and send the time domain resource configuration information 2 to the UE 30 by using cell-specific RRC signaling, UE-specific RRC signaling, UE-group SFI signaling, and UE-specific DCI signaling. The time domain resource configuration information 2 may be used by the UE 30 to determine locations and quantities of available uplink slots (symbols), downlink slots (symbols), and flexible slots in the radio frame of the time domain resource 2 of the SIM card 2. The UE 30 may perform uplink and downlink data transmission with the base station 20 based on the time domain resource 2 via the SIM card 2. Periodicity duration in the time domain resource 2 may be referred to as second periodicity duration. For example, if the periodicity duration in the time domain resource 2 is 5 ms, 5ms may be referred to as the second periodicity duration.

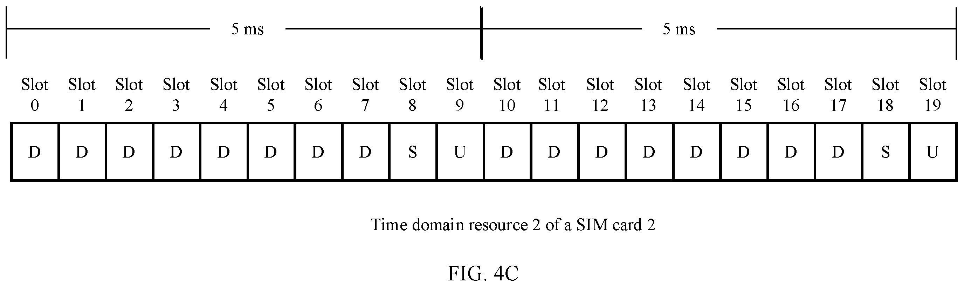

For example, the time domain resource 2 may be shown in FIG. 4C. The periodicity in the time domain resource 2 is 5ms. In one periodicity, an allocation ratio of downlink slots to flexible slots to and uplink slots is 8:1:1.

It should be noted that the time domain resource configuration information 1 may be the same as or different from the time domain resource configuration information 2. This embodiment of this application is described by using an example in which the time domain resource configuration information 1 and the time domain resource configuration information 2 are different.

S403: Optionally, the UE 30 obtains a time point at which there are two adjacent downlink slots in the time domain resource 1, and a second downlink slot corresponds to an uplink slot in the time domain resource 2; and/or a time point at which there are two adjacent downlink slots in the time domain resource 1, and a second downlink slot corresponds to a flexible slot in the time domain resource 2; and/or a time point at which the time domain resource 1 is a non-uplink symbol in a flexible slot, and the time domain resource 2 is a symbol in an uplink slot; and/or a time point at which the time domain resource 1 is a non-uplink symbol in a flexible slot, and the time domain resource 2 is an uplink symbol in the flexible slot. Then, the UE 30 may store the obtained time point as an index 1.

S404: The UE 30 sends uplink data to the base station 10 via the SIM card 1 in a slot 1, where the slot 1 is in the radio frame 1 of the time domain resource 1.

It should be noted that before the UE 30 sends the uplink data to the base station 10 via the SIM card 1 in the slot 1, the base station 10 may send, to the UE 30, uplink grant (uplink grant, UL grant) information corresponding to the slot 1, to indicate the UE 30 to send the uplink data in the slot 1 via the SIM card 1. The slot 1 may be an uplink slot, or may be a flexible slot. This is not limited in this application.

Specifically, the UL grant information is a DCI format 0, and the UL grant information sent by the base station 10 carries a physical uplink shared channel (physical uplink shared channel, PUSCH) resource information allocated by the base station 10 to the UE 30 to send the uplink data via the SIM card 1, and indicates that after the UE 30 receives the UL grant information and at an interval of specified value A1 (for example, one, two, three, and four) slots, the UE 30 may send the uplink data to the base station 10 based on the PUSCH resource information via the SIM card 1 in a specified uplink slot/uplink symbol.

For example, if the specified value A1 is 3, after the UE 30 may receive the UL grant information and at an interval of three slots, the UE 30 may send the uplink data to the base station 10 based on the PUSCH resource information via the SIM card 1 in the specified uplink slot/uplink symbol.

S405: The base station 20 may send one or more pieces of UL grant information of the SIM card 2 to the UE 30, where the one or more pieces of UL grant information include UL grant information 1.

Specifically, the UE 30 may receive one or more pieces of UL grant information, where the one or more pieces of UL grant information include the one or more pieces of UL grant information of the SIM card 2 sent by the base station 20, and the one or more pieces of UL grant information sent by the base station 20 include the UL grant information 1.

It should be noted that the UE 30 may receive, before sending the uplink data in the slot 1 via the SIM card 1, the one or more pieces of UL grant information sent by the base station 20, or may receive, after sending the uplink data in the slot 1 via the SIM card 1, the one or more pieces of UL grant information sent by the base station 20. That is, an occasion for receiving the one or more pieces of UL grant information sent by the base station 20 is not limited in this application.

The UL grant information sent by the base station 20 carries the PUSCH resource information that is allocated by the base station 20 to the UE 30 and that is used to send the uplink data via the SIM card 2, and indicates that after the UE 30 receives the UL grant information and at the interval of specified value A1 (for example, one, two, three, and four) slots, the UE 30 may send the uplink data to the base station 20 based on the PUSCH resource information via the SIM card 2 in the specified uplink slot/uplink symbol.

For example, if the specified value A1 is 3, after the UE 30 may receive the UL grant information and at an interval of three slots, the UE 30 may send the uplink data to the base station 20 based on the PUSCH resource information via the SIM card 2 in the specified uplink slot/uplink symbol.

S406: After receiving the UL grant information 1, the UE 30 determines whether the UE 30 can send, via the SIM card 2, the uplink data through an uplink channel in a slot 2 corresponding to the UL grant information 1.

It may be understood that, after the UE 30 sends the uplink data via the SIM card 1, the uplink channel is not released in time even after sending is completed. In this case, the uplink channel is still occupied by the SIM card 1. After the UE 30 receives the UL grant information 1, the UE 30 needs to determine, based on allowed switching time of an uplink channel of a high-priority card (which may be referred to as allowed switching time of an uplink channel), whether the uplink channel can be switched to the SIM card 2, so that the UE 30 can send the uplink data in the slot 2 via the SIM card 2. In different application scenarios, the allowed switching time of the uplink channel of the high-priority card is different. Therefore, a manner of performing this step is also different.

The allowed switching time of the uplink channel is time reserved for the UE 30 to switch the uplink channel from the SIM card 1 that executes a high-priority service to the SIM card 2 that executes a low-priority service. According to different allowed switching time of the uplink channel, an application scenario of this step may be divided into the following several cases:
(A) In some embodiments, the allowed switching time of the uplink channel is associated with a periodicity in the time domain resource.

That the allowed switching time of the uplink channel is associated with the periodicity in the time domain resource may mean that time in which the UE 30 switches the uplink channel from the SIM card (for example, the SIM card 1) that executes the high-priority service to the SIM card (for example, the SIM card 2) that executes the low-priority service is consistent with the periodicity in the time domain resource.

For example, when periodicities of the time domain resource 1 and the time domain resource 2 are the same, and are both Sms, the allowed switching time of the uplink channel is 5 ms; when periodicities of the time domain resource 1 and the time domain resource 2 are the same, and are both 2.5ms, the allowed switching time of the uplink channel is 2.5 ms; or when periodicities of the time domain resource 1 and the time domain resource 2 are different, and the allowed switching time of the uplink channel is consistent with short period duration, for example, if a periodicity of the time domain resource 1 is 5 ms, and a periodicity of the time domain resource 2 is 2.5 ms, the allowed switching time of the uplink channel is 2.5 ms. Subsequent embodiments are described by using an example in which the periodicities of the time domain resource 1 and the time domain resource 2 are the same.

Specifically, in this scenario, the UE 30 receives the UL grant information 1 sent by the base station 20, and the UL grant information 1 indicates that the UE 30 sends the uplink data to the base station 20 via the SIM card 2 in the slot 2 of the radio frame 2 in the time domain resource 2. Time of the radio frame 2 is the same as time of the radio frame 1 mentioned above. The slot 2 may be an uplink slot, or may be a flexible slot.

Before the UE 30 sends the uplink data to the base station 20 via the SIM card 2 in the slot 2, the UE 30 needs to first determine whether the UE 30 sends the uplink data via the SIM card 1 in a slot 3 of the radio frame 1 in the time domain resource 1, and whether the UE 30 has sent the uplink data via the SIM card 1 in a periodicity that the slot 3 is in. If the UE 30 does not send the uplink data via the SIM card 1 in the slot 3 of the radio frame 1 in the time domain resource 1, and the UE 30 has not sent the uplink data via the SIM card 1 in the periodicity that the slot 3 is in, the UE 30 switches the uplink channel to the SIM card 2; or otherwise, the UE 30 does not switch the uplink channel to the SIM card 2.

Time of the slot 2 is the same as time of the slot 3, the slot 1 and the slot 3 are not in a same periodicity (where for example, the slot 1 is in a first periodicity, and the slot 3 is in a second periodicity), and the slot 2 and the slot 1 are not in a same periodicity (that is, the slot 2 is also in the second periodicity).

Specifically, it is assumed t there are the following two scenarios:
(1) When the UE 30 receives the UL grant information 2 sent by the base station 10, the UE 30 may determine that the UE 30 sends the uplink data via the SIM card 1 in the slot 3. When the UE 30 receives UL grant information corresponding to any slot before the slot 3 in the periodicity that the slot 3 is in, the UE 30 may determine that the uplink data has been sent via the SIM card 1 in the periodicity that the slot 3 is in.

Therefore, when the UE 30 needs to send the uplink data via the SIM card 1 in the slot 3, and/or when the UE 30 has sent the uplink data via the SIM card 1 in the periodicity that the slot 3 is in, the UE 30 cannot switch the uplink channel to the SIM card 2. In this case, the UE 30 needs to continue to determine the slot in the time domain resource 2 until a slot that meets the following scenario (2) in the scenario (A) is found, and the UE 30 switches the uplink channel to the SIM card 2 in the slot, so that the UE 30 can send the uplink data to the base station 20 via the SIM card 2, or the UE 30 can discard (drop) the uplink data.

The UL grant information 2 is used to indicate that the UE 30 sends the uplink data via the SIM card 1 in the slot 3 of the radio frame 1 in the time domain resource 1.

(2) When the UE 30 does not receive the UL grant information 2 sent by the base station 10, the UE 30 determines that the uplink data is not sent via the SIM card 1 in the slot 3. When the UE 30 does not receive UL grant information corresponding to any slot before the slot 3 in the periodicity that the slot 3 is in, the UE 30 determines that the uplink data has not been sent via the SIM card 1 in the periodicity that the slot 3 is in.

Therefore, when the UE 30 does not need to send the uplink data via the SIM card 1 in the slot 3, and the UE 30 has not sent the uplink data via the SIM card 1 in the periodicity that the slot 3 is in, the UE 30 switches the uplink channel to the SIM card 2.

It should be noted that the slot 3 may be an uplink slot, a flexible slot, or a downlink slot. However, when the slot 3 is the downlink slot, the UE 30 does not receive the UL grant information 2.

For example, the time domain resource 1 of the SIM card 1 shown in FIG. 4B and the time domain resource 2 of the SIM card 2 shown in FIG. 4C are used as examples. An example in which the specified value A1 is 3, and both the periodicity duration of the time domain resource 1 and the periodicity duration of the time domain resource 2 are 5 ms is used for description. The slot 0 to the slot 19 in the time domain resource 1 are in the radio frame 1, the slot 0 to the slot 19 in the time domain resource 2 are in the radio frame 2, and the time of the radio frame 1 is the same as the time of the radio frame 2.

First, the UE 30 has sent the uplink data to the base station 10 via the SIM card 1 in the slot 9 (namely, the slot 1) in the time domain resource 1.

The UE 30 receives the UL grant information 1 at a time point that the slot 15 in the time domain resource 2 is in, and the UL grant information 1 indicates that the UE 30 sends the uplink data via the SIM card 2 in the slot 19 (namely, the slot 2) in the time domain resource 2.

Before the UE 30 sends the uplink data via the SIM card 2 in the slot 19 in the time domain resource 2, and the UE 30 does not receive the UL grant information 2 sent by the base station 10, the UE 30 may determine that the uplink data is not sent via the SIM card 1 in the slot 19 in the time domain resource 1. In addition, the UE 30 does not receive UL grant information corresponding to any slot (namely, the slot 10 to the slot 18) before the slot 19 in the periodicity that the slot 19 in the time domain resource 1 is in, and the UE 30 determines that the uplink data has not been sent via the SIM card 1 in the periodicity that the slot 19 in the time domain resource 1 is in (that is, within 5ms of the slot 10 to the slot 19). Therefore, the UE 30 may switch the uplink channel to the SIM card 2.

The UL grant information 2 may be used to indicate that the UE 30 sends the uplink data via the SIM card 1 in the slot 19 (namely, the foregoing slot 3) in the time domain resource 1, and the slot 9 and the slot 19 in the time domain resource 1 are not in one periodicity, that is, the slot 9 in the time domain resource 1 is in the first periodicity, and the slot 19 in the time domain resource 1 and the slot 19 in the time domain resource 2 are in the second periodicity.

(B) In some embodiments, the allowed switching time of the uplink channel is at a slot level.

That the allowed switching time of the uplink channel is at the slot level may mean that time reserved for the UE 30 to switch the uplink channel from the SIM card 1 to the SIM card 2 is at least one slot and is less than one radio frame.

Execution logic of the scenario (B) is as follows:
(B1) The UE 30 determines, in time that a current slot in the time domain resource 2 is in, whether a next slot in the time domain resource 2 is an uplink slot or a flexible slot.

Specifically, when the UE 30 determines, in the time that the current slot in the time domain resource 2 is in, that the next slot in the time domain resource 2 is the uplink slot or the flexible slot, the UE 30 continues to perform the following procedure; or otherwise, does not perform the following procedure.

For example, if the UE 30 is currently located in time of a previous slot of the slot 2 in the time domain resource 2, the UE 30 determines, in the time of the slot, whether the slot 2 is an uplink slot or a flexible slot. If the UE 30 determines that the slot 2 is an uplink slot or a flexible slot, the UE 30 continues to perform the following procedure.

It may be understood that in some embodiments, the UE 30 needs to determine, in each incoming slot in the time domain resource 2, whether a next slot in the time domain resource 2 is an uplink slot or a flexible slot.

In other embodiments, the UE 30 may determine, in each slot in the time domain resource 2 after there is to-be-sent uplink data, whether a next slot in the time domain resource 2 is an uplink slot or a flexible slot. For example, that there is to-be-sent uplink data may be that the UE 30 determines that the SIM card 2 has to-be-sent uplink data relative to a low-priority service of the SIM card 1. The UE 30 may determine, by using a BSR, whether there is to-be-sent uplink data, or may determine, based on whether the UL grant information is received, whether there is to-be-sent uplink data.

It should be noted that "the UE 30 is in the time that the current slot in the time domain resource 2 is in" may be "the UE 30 is in the current slot in the time domain resource 2" for short.

(B2) When the UE 30 determines, in a current slot in the time domain resource 2, that a next slot in the time domain resource 2 is an uplink slot or a flexible slot, the UE 30 determines whether UL grant information corresponding to the next slot is received.

For example, if the UE 30 is currently located in a previous slot of the slot 2 in the time domain resource 2, and the UE 30 has determined that the slot 2 is an uplink slot or a flexible slot, the UE 30 determines whether the UL grant information 1 corresponding to the slot 2 is received. If the UE 30 determines that the UL grant information 1 is received, the UE 30 continues to perform the following procedure; or otherwise, does not perform the following procedure.

The UL grant information 1 is sent by the base station 20 to the UE 30, and is used to indicate the UE 30 to send the uplink data to the base station 20 via the SIM card 2 in the slot 2 of the radio frame 2 in the time domain resource 2. Time of the radio frame 2 is the same as time of the radio frame 1 mentioned above, or whether time of the radio frame 1 is the same as time of the radio frame 2 is not limited. However, the slot 1 and the slot 2 are in a time period 1, and the time period 1 is a time period in which the slot 1 is used as a start time point and duration is specified duration (for example, 8 milliseconds or 10 milliseconds). For details, refer to the foregoing example shown in FIG. 1B.

A subsequent example in which the slot 1 and the slot 2 are in the time period 1 is used for description. The slot 2 may be an uplink slot, or may be a flexible slot.

The time period 1 may be related to duration between a slot in which uplink channel switching decision is performed and a slot in which the UE 30 sends the uplink data via the SIM card 1. For example, when the UE 30 performs uplink channel switching decision in each slot, the slot 1 and the slot 2 may be at an interval of one slot. Therefore, the time period 1 includes the slot 1, the slot separated between the slot 1 and the slot 2, and the slot 2, that is, the time period 1 includes three slots; and the slot separated between the slot 1 and the slot 2 may be used for radio frequency channel switching. For another example, when the duration between the slot in which uplink channel switching decision is performed and the slot in which the UE 30 sends the uplink data via the SIM card 1 is four slots, the slot 1 and the slot 2 may be separated by four slots. Therefore, the time period 1 includes the slot 1, the four slots separated between the slot 1 and the slot 2, and the slot 2, that is, the time period 1 includes six slots. For example, a previous slot of the slot 2 may be used for radio frequency channel switching.

(B3) When the UE 30 determines, in a current slot in the time domain resource 2, that UL grant information corresponding to a next slot is received, the UE 30 determines, based on the following three conditions, whether to switch the uplink channel from the SIM card 1 to the SIM card 2: (1) whether the uplink channel is occupied by the SIM card 1; (2) whether the UE 30 sends the uplink data via the SIM card 1 at the time point in the current slot in the time domain resource 2 is in; and (3) whether the UE 30 sends the uplink data via the SIM card 1 at the time point that the next slot of the current slot in the time domain resource 2 is in.

For example, if the UE 30 is currently in the previous slot of the slot 2, the following three conditions need to be determined: (1) whether the uplink channel is occupied by the SIM card 1; (2) whether the UE 30 sends, at the time point that the current slot in the time domain resource 2 is in, that is, in a previous slot of the slot 3 in the time domain resource 1, the uplink data via the SIM card 1; and (3) whether the UE 30 sends, at the time point that the slot 2 is in, that is, whether the UE 30 is in the slot 3 in the time domain resource 1, the uplink data via the SIM card 1.

If the condition (1) is determined as yes, the condition (2) and the condition (3) are determined as no, the UE 30 may switch the uplink channel from the SIM card 1 to the SIM card 2 in the time that the previous slot of the slot 2 is in, so that the UE 30 may send the uplink data via the SIM card 2 in the slot 2; or otherwise, the UE 30 does not perform the uplink channel switching operation.

The time of the slot 2 is the same as the time of the slot 3, and therefore the slot 1, the slot 2, and the slot 3 are in the time period 1. The slot 1, the slot 2, and the slot 3 may be in a same periodicity, or may be in different periodicities. The time of the slot 1 and the time of the slot 2 may be separated by one slot, or may be separated by two or more slots.

Specifically, there are the following two scenarios for determining the condition (3):
(1) When the UE 30 receives the UL grant information 2 sent by the base station 10, the UE 30 may determine that the uplink data is sent via the SIM card 1 in the slot 3. Therefore, the UE 30 cannot switch the uplink channel to the SIM card 2. In this case, the UE 30 needs to continue to determine the slot in the time domain resource 2 until a slot that meets the following scenario (2) determined by using the condition (3) and that meets the condition (1) as yes and the condition (2) as no is found, and the UE 30 switches the uplink channel to the SIM card 2, so that the UE 30 can send the uplink data to the base station 20 via the SIM card 2 in the slot, or the UE 30 does not continue to determine the slot in the time domain resource 2, and directly discards (drops) the uplink data.

The UL grant information 2 is used to indicate that the UE 30 sends the uplink data via the SIM card 1 in the slot 3 of the radio frame 1 in the time domain resource 1.

In some examples, the electronic device (namely, the UE 30) may further receive UL grant information 3 (which may be referred to as second UL grant information) sent by the base station 20 and UL grant information 4 (which may be referred to as third UL grant information) sent by the base station 10. The UL grant information 3 indicates the UE 30 to send the uplink data via the SIM card 2 in a slot 4 (which may be referred to as a fourth slot) in the time domain resource 2. The UL grant information 4 indicates the UE 30 to send the uplink data via the SIM card 1 in the slot 1 in the time domain resource 1. Time of the slot 4 is the same as the time of the slot 1. In this case, a conflict occurs between the SIM card 1 and the SIM card 2 in time in which the uplink data is sent. In addition, the SIM card 1 performs a high-priority service. In this case, the SIM card 1 occupies the uplink channel, the SIM card 2 cannot send the uplink data, and the SIM card 2 continues to search for a next slot that can be used to send the uplink data in the time domain resource 2, namely, the slot 2.

(2) When the UE 30 does not receive the UL grant information 2 sent by the base station 10, the UE 30 determines not to send the uplink data via the SIM card 1 in the slot 3.

It should be noted that the slot 3 may be an uplink slot, a flexible slot, or a downlink slot. However, when the slot 3 is the downlink slot, the UE 30 does not receive the UL grant information 2.

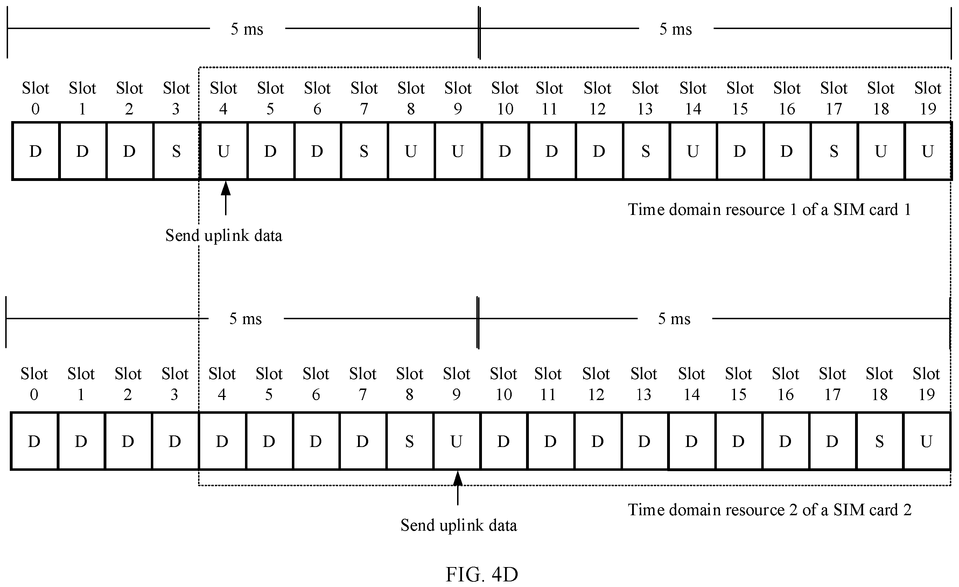

For example, as shown in FIG. 4D, the time domain resource 1 of the SIM card 1 shown in FIG. 4B and the time domain resource 2 of the SIM card 2 shown in FIG. 4C are used as examples. An example in which the specified value A1 is 3, and both the periodicity duration of the time domain resource 1 and the periodicity duration of the time domain resource 2 are 5 ms is used for description.

First, the UE 30 has sent the uplink data to the base station 10 via the SIM card 1 in the slot 4 (namely, the slot 1) in the time domain resource 1.

Based on the execution logic of the foregoing scenario (B), the UE 30 determines, in a slot 8 in the time domain resource 2, whether a slot 9 (namely, the slot 2) in the time domain resource 2 is an uplink slot or a flexible slot. If the slot 9 (namely, the slot 2) in the time domain resource 2 is an uplink slot or a flexible slot, the UE 30 determines whether the UL grant information (namely, the UL grant information 1) corresponding to the slot 9 in the time domain resource 2 is received. If the UE 30 determines that the UL grant information 1 is received at a time point that a slot 5 in the time domain resource 2 is in, and the UL grant information 1 indicates the UE 30 to send the uplink data via the SIM card 2 in the slot 9 (namely, the slot 2) in the time domain resource 2, the UE 30 determines: (1) whether the uplink channel is occupied by the SIM card 1; (2) whether the UE 30 sends the uplink data via the SIM card 1 in the slot 8 in the time domain resource 1; and (3) whether the UE 30 sends the uplink data via the SIM card 1 in the slot 9 in the time domain resource 1.

If the UE 30 determines that: (1) the uplink channel is occupied by the SIM card 1; (2) the UE 30 does not send the uplink data via the SIM card 1 in the slot 8 in the time domain resource 1; and (3) the UE 30 does not receive the UL grant information 2 sent by the base station 10, the UE 30 determines that the uplink data is not sent via the SIM card 1 in the slot 9 in the time domain resource 1. In this case, the UE 30 may switch the uplink channel to the SIM card 2 in the time that the slot 8 in the time domain resource 2 is in, so that the UE 30 can send the uplink data via the SIM card 2 in the slot 9 in the time domain resource 2. The UL grant information 2 may be used to indicate the UE 30 to send the uplink data via the SIM card 1 in the slot 9 (namely, the slot 3) in the time domain resource 1.

It should be noted that in this example, the slot 1 is the slot 4 in the time domain resource 1, the slot 2 is the slot 9 in the time domain resource 2, the slot 3 is the slot 9 in the time domain resource 1, the slot 1, the slot 2, and the slot 3 are in the time period 1 (that is, in the slot 4 to the slot 19), and the time of the slot 1 and the time of the slot 2 are at an interval of four slots.

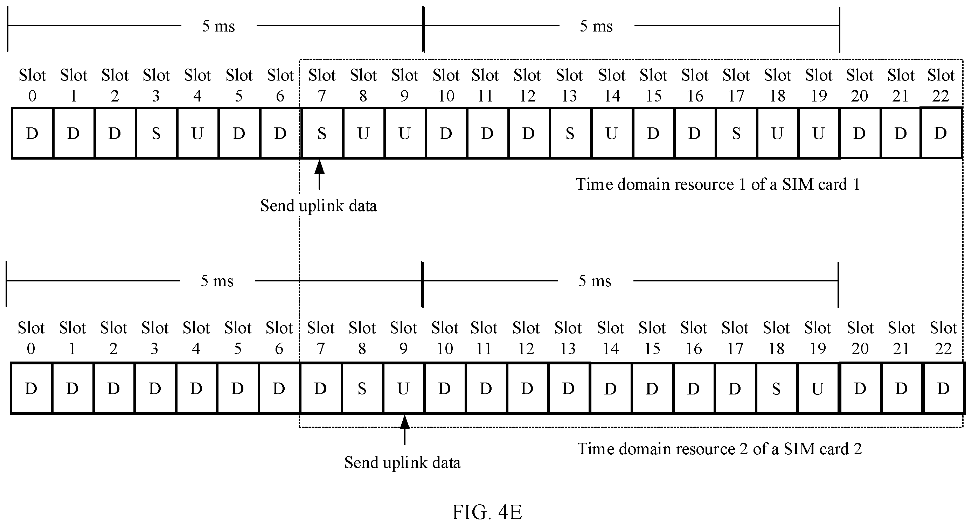

For example, as shown in FIG. 4E, the time domain resource 1 of the SIM card 1 shown in FIG. 4B and the time domain resource 2 of the SIM card 2 shown in FIG. 4C are used as examples. An example in which the specified value A1 is 1, and both the periodicity duration of the time domain resource 1 and the periodicity duration of the time domain resource 2 are 5 ms is used for description.

First, the UE 30 has sent the uplink data to the base station 10 via the SIM card 1 in the slot 7 (namely, the slot 1) in the time domain resource 1.

Based on the execution logic of the foregoing scenario (B), the UE 30 determines, in a slot 8 in the time domain resource 2, whether a slot 9 (namely, the slot 2) in the time domain resource 2 is an uplink slot or a flexible slot. If the slot 9 (namely, the slot 2) in the time domain resource 2 is an uplink slot or a flexible slot, the UE 30 determines whether the UL grant information (namely, the UL grant information 1) corresponding to the slot 9 in the time domain resource 2 is received. If the UE 30 determines that the UL grant information 1 is received at a time point that a slot 7 in the time domain resource 2 is in, and the UL grant information 1 indicates the UE 30 to send the uplink data via the SIM card 2 in the slot 9 (namely, the slot 2) in the time domain resource 2, the UE 30 determines: (1) whether the uplink channel is occupied by the SIM card 1; (2) whether the UE 30 sends the uplink data via the SIM card 1 in the slot 8 in the time domain resource 1; and (3) whether the UE 30 sends the uplink data via the SIM card 1 in the slot 9 in the time domain resource 1.

If the UE 30 determines that: (1) the uplink channel is occupied by the SIM card 1; (2) the UE 30 does not send the uplink data via the SIM card 1 in the slot 8 in the time domain resource 1; and (3) the UE 30 does not receive the UL grant information 2 sent by the base station 10, the UE 30 determines that the uplink data is not sent via the SIM card 1 in the slot 9 in the time domain resource 1. In this case, the UE 30 may switch the uplink channel to the SIM card 2 in the time that the slot 8 in the time domain resource 2 is in, so that the UE 30 can send the uplink data via the SIM card 2 in the slot 9 in the time domain resource 2. The UL grant information 2 may be used to indicate the UE 30 to send the uplink data via the SIM card 1 in the slot 9 (namely, the slot 3) in the time domain resource 1.

It should be noted that in this example, the slot 1 is the slot 7 in the time domain resource 1, the slot 2 is the slot 9 in the time domain resource 2, the slot 3 is the slot 9 in the time domain resource 1, the slot 1, the slot 2, and the slot 3 are in the time period 1 (that is, in the slot 7 to the slot 22), and the time of the slot 1 and the time of the slot 2 are at an interval of four slots. In another embodiment, the slot 1, the slot 2, and the slot 3 may alternatively be in a time period 1 such as a slot 7 to a slot 14, that is, specific duration of the time period 1 is not limited in this application.

For another example, the electronic device may receive the UL grant information 1 and the UL grant information 3 that are sent by the base station 20, and the UL grant information 4 sent by the base station 10. The UL grant information 3 indicates the UE 30 to send the uplink data via the SIM card 2 in a slot 18 (namely, the slot 4) in the time domain resource 2. The UL grant information 4 indicates the UE 30 to send the uplink data via the SIM card 1 in a slot 18 (namely, the slot 1) in the time domain resource 1. The time of the slot 4 is the same as the time of the slot 1.

In this case, a conflict occurs between the SIM card 1 and the SIM card 2 in time in which the uplink data is sent. In addition, the SIM card 1 performs a high-priority service. In this case, the SIM card 1 occupies the slot 18 of the uplink channel in the time domain resource 1 to send the uplink data, and the SIM card 2 cannot send the uplink data.

Because the UL grant information 1 indicates that the UE 30 sends the uplink data via the SIM card 2 in the slot 19 (namely, the slot 2) in the time domain resource 2, before the UE 30 sends the uplink data via the SIM card 2 in the slot 19 in the time domain resource 2, the UE 30 does not receive the UL grant information 2 sent by the base station 10, and the UE 30 determines that the uplink data is not sent via the SIM card 1 in the slot 19 in the time domain resource 1. Therefore, the UE 30 may switch the uplink channel to the SIM card 2, so that the UE 30 may send the uplink data via the SIM card 2. The UL grant information 2 may be used to indicate the UE 30 to send uplink data via the SIM card 1 in the slot 19 (namely, the slot 3) in the time domain resource 1.

In another possible implementation, the UE 30 has obtained and stored the index 1 in S403 above, and has sent the uplink data via the SIM card 1 in the slot 1. When the UE 30 receives the UL grant information 1 sent by the base station 20, the UL grant information 1 indicates that the UE 30 sends the uplink data to the base station 20 via the SIM card 2 in the slot 2 of the radio frame 2 in the time domain resource 2. In this case, if the UE 30 determines that the time point that the slot 2 is in exists in a record of the index 1, the UE 30 switches the uplink channel to the SIM card 2, so that the UE 30 may send the uplink data to the base station 20 via the SIM card 2 in the slot 2.

The slot 1 and the slot 2 are in the time period 1, and the slot 2 is an uplink slot or a flexible slot.

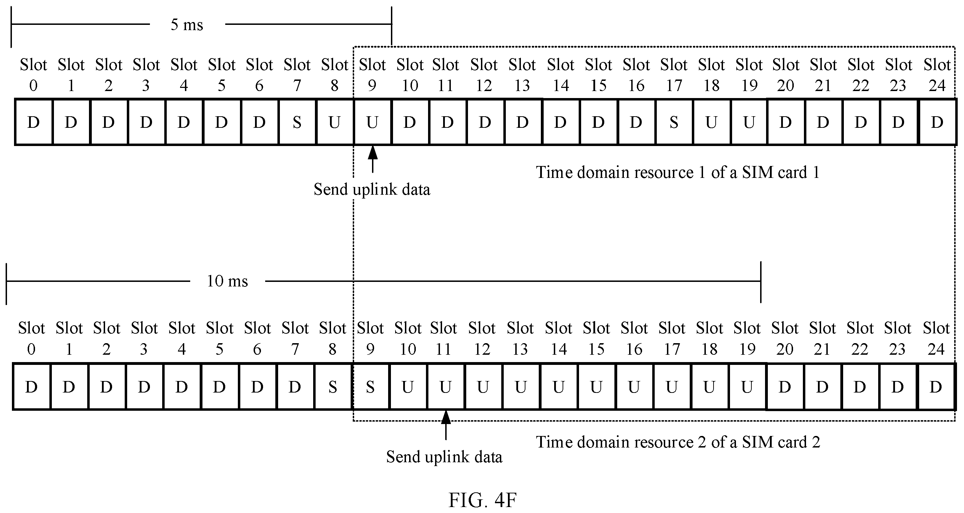

For example, the time domain resource 1 of the SIM card 1 and the time domain resource 2 of the SIM card 2 shown in FIG. 4F are used as examples.

First, the UE 30 has sent the uplink data to the base station 10 via the SIM card 1 in the slot 9 (namely, the slot 1) in the time domain resource 1. When the UE 30 receives the UL grant information 1 sent by the base station 20, the UL grant information 1 indicates that the UE 30 sends the uplink data to the base station 20 via the SIM card 2 in the slot 11 (that is, the slot 2) of the radio frame 2 in the time domain resource 2. In this case, if the UE 30 determines that the slot 11 in the time domain resource 2 exists in the record of the index 1, the UE 30 switches the uplink channel to the SIM card 2, so that the UE 30 may send the uplink data to the base station 20 via the SIM card 2 in the slot 11 in the time domain resource 2.

It should be noted that in this example, the slot 1 is the slot 9 in the time domain resource 1, the slot 2 is the slot 11 in the time domain resource 2, and the time of the slot 1 and the time of the slot 2 are at an interval of one slot. In another example, the time of the slot 1 and the time of the slot 2 may also be at an interval of a plurality of slots, for example, may be at an interval of two slots or three slots. This is not limited in this application.

(C) In some embodiments, the allowed switching time of the uplink channel is at a symbol level.

That the allowed switching time of the uplink channel is at the symbol level may mean time reserved for the UE 30 to switch the uplink channel from the SIM card 1 to the SIM card 2 is greater than a guard interval (guard interval, GI, which may be a guard interval for short) between symbols or is greater than one symbol, and is less than one slot.

Execution logic of the scenario (C) is as follows:
(C1) The UE 30 determines, in time that a current slot in the time domain resource 2 is in, whether a next slot in the time domain resource 2 is an uplink slot or a flexible slot.

Specifically, when the UE 30 determines, in the time that the current slot in the time domain resource 2 is in, that the next slot in the time domain resource 2 is the uplink slot or the flexible slot, the UE 30 continues to perform the following procedure; or otherwise, does not perform the following procedure.

For example, if the UE 30 is currently located in time of a previous slot of the slot 2 in the time domain resource 2, the UE 30 determines, in the time of the slot, whether the slot 2 is an uplink slot or a flexible slot. If the UE 30 determines that the slot 2 is an uplink slot or a flexible slot, the UE 30 continues to perform the following procedure.

It may be understood that the UE 30 needs to determine, in each slot in the time domain resource 2, whether a next slot in the time domain resource 2 is an uplink slot or a flexible slot.

It should be noted that "the UE 30 is in the time that the current slot in the time domain resource 2 is in" may be "the UE 30 is in the current slot in the time domain resource 2" for short.

(C2) When the UE 30 determines, in a current slot in the time domain resource 2, that a next slot in the time domain resource 2 is an uplink slot or a flexible slot, the UE 30 determines whether UL grant information corresponding to the next slot is received.

For example, if the UE 30 is currently located in a previous slot of the slot 2 in the time domain resource 2, and the UE 30 has determined that the slot 2 is an uplink slot or a flexible slot, the UE 30 determines whether the UL grant information 1 corresponding to the slot 2 is received. If the UE 30 determines that the UL grant information 1 is received, the UE 30 continues to perform the following procedure; or otherwise, does not perform the following procedure.

The UL grant information 1 is sent by the base station 20 to the UE 30, and is used to indicate the UE 30 to send the uplink data to the base station 20 via the SIM card 2 in the slot 2 of the radio frame 2 in the time domain resource 2. Time of the radio frame 2 is the same as time of the radio frame 1 mentioned above, or whether time of the radio frame 1 is the same as time of the radio frame 2 is not limited. However, the slot 1 and the slot 2 are in a time period 1, and the time period 1 is a time period in which the slot 1 is used as a start time point and duration is specified duration (for example, 8 milliseconds or 10 milliseconds). For details, refer to the foregoing example shown in FIG. 1B. A subsequent example in which the slot 1 and the slot 2 are in the time period 1 is used for description. The slot 2 may be an uplink slot, or may be a flexible slot.

(C3) When the UE 30 determines, in a current slot in the time domain resource 2, that UL grant information corresponding to a next slot is received, the UE 30 determines, based on the following two conditions, whether to switch the uplink channel from the SIM card 1 to the SIM card 2: (1) whether the uplink channel is occupied by the SIM card 1; and (2) whether the UE 30 sends the uplink data via the SIM card 1 at the time point that the next slot of the current slot in the time domain resource 2 is in.

For example, if the UE 30 is currently in the previous slot of the slot 2, the following two conditions need to be determined: (1) whether the uplink channel is occupied by the SIM card 1; and (2) whether the UE 30 sends, at the time point that the slot 2 is in, that is, whether the UE 30 is in the slot 3 in the time domain resource 1, the uplink data via the SIM card 1.

The time of the slot 2 is the same as the time of the slot 3, and therefore the slot 1, the slot 2, and the slot 3 are in the time period 1. The slot 1, the slot 2, and the slot 3 may be in a same periodicity, or may be in different periodicities. The time of the slot 1 may be adjacent to the time of the slot 2, and the time of the slot 1 and the time of the slot 2 may be at an interval of one slot, or may be at an interval of two or more slots.

Specifically, if the condition (1) is no, the UE 30 does not perform the uplink channel switching operation; or
if the condition (1) is determined as yes, the condition (2) has the following three scenarios:
(1) The time of the slot 2 is the same as the time of the slot 3, and symbols in the slots 3 are not all scheduled. When the UE 30 receives the UL grant information 2 sent by the base station 10, the UE 30 may determine that the uplink data is sent via the SIM card 1 in the slot 3, and the UE 30 may determine, based on the UL grant information 2, that the UE 30 sends the uplink data via the SIM card 1 on one or more uplink symbols in the slot 3. Therefore, the UE 30 may switch the uplink channel to the SIM card 2 on the one or more symbols on which the uplink data is not sent via the SIM card 1 in the slot 3, so that the UE 30 may send the uplink data via the SIM card 2 on one or more uplink symbols in the slot 2. The switching time of the uplink channel occupies a guard interval (GI) between symbols, or occupies one or more symbols but is less than one slot, and time of the one or more uplink symbols in the slot 2 is different from time of the one or more uplink symbols in the slot 3

The UL grant information 2 is used to indicate that the UE 30 sends the uplink data via the SIM card 1 on the one or more uplink symbols in the slot 3 of the radio frame 1 in the time domain resource 1.

It should be noted that when the UE 30 implements the scenario (1), the UE 30 may not send the uplink data to the base station 10 via the SIM card 1 in the slot 1, that is, may not perform step S404.

(2) The time of the slot 2 is the same as the time of the slot 3, and the slot 3 is not scheduled. When the UE 30 does not receive the UL grant information 2 sent by the base station 10, the UE 30 may determine that the uplink data is not sent to the base station 10 via the SIM card 1 in the slot 3. Therefore, the UE 30 switches the uplink channel to the SIM card 2, so that the UE 30 may send the uplink data via the SIM card 2 in the slot 2. In this case, the uplink data may be sent in the slot 1, that is, the UE 30 performs step S404; or the uplink data may not be sent in the slot 1, that is, the UE 30 may not perform step S404.

(3) The slot 1 is adjacent to the slot 2, and the slot 3 is not scheduled. When the UE 30 does not receive the UL grant information 2 sent by the base station 10, the UE 30 may determine that the uplink data is not sent to the base station 10 via the SIM card 1 in the slot 3. Therefore, the UE 30 switches the uplink channel to the SIM card 2, so that the UE 30 may send the uplink data via the SIM card 2 in the slot 2. The switching time of the uplink channel occupies an inter-symbol guard interval (GI) between the last symbol in the slot 1 and the first symbol in the slot 3, or occupies first N (for example, one or two) symbols in the slot 2. When the switching time of the uplink channel occupies the first N (for example, one or two) symbols in the slot 2, last (14-N) symbols in the slot 2 are used by the UE 30 to send the uplink data via the SIM card 2, and N is less than 14.

The UL grant information 2 is used to indicate that the UE 30 sends the uplink data via the SIM card 1 on the one or more uplink symbols in the slot 3 of the radio frame 1 in the time domain resource 1.

It should be noted that the slot 3 may be an uplink slot, a flexible slot, or a downlink slot. However, when the slot 3 is the downlink slot, the UE 30 does not receive the UL grant information 2.

Therefore, in the implementation scenario (1), a correspondence between the slot 2 and the slot 3 may be as follows:
when the slot 2 is an uplink slot, the slot 3 is an uplink slot; or
when the slot 2 is an uplink slot, the slot 3 is a flexible slot; or
when the slot 2 is a flexible slot, the slot 3 is an uplink slot; or
when the slot 2 is a flexible slot, the slot 3 is a flexible slot.

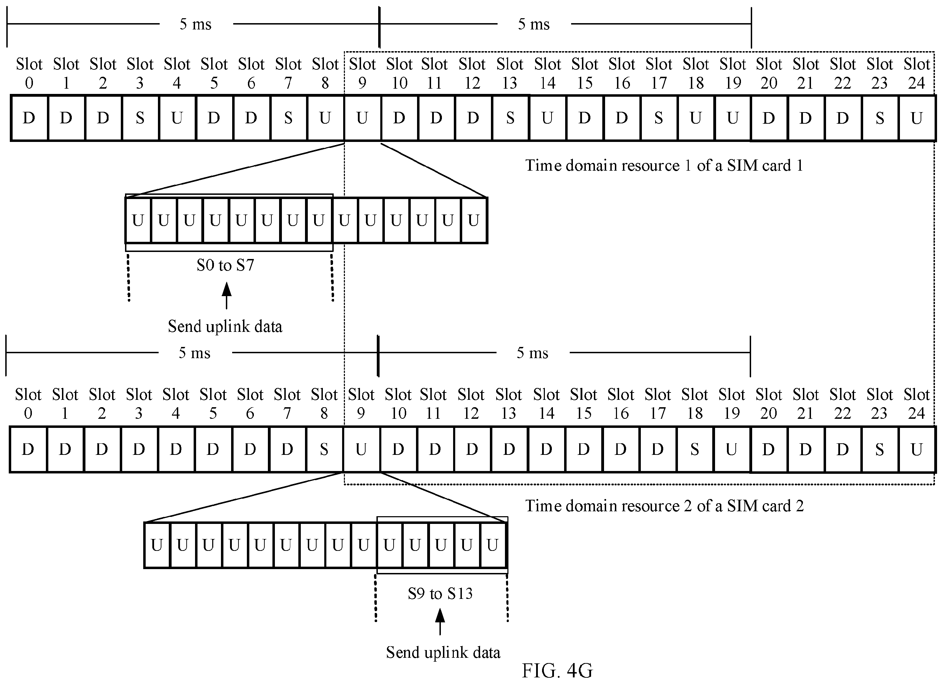

For example, as shown in FIG. 4G, the time domain resource 1 of the SIM card 1 shown in FIG. 4B and the time domain resource 2 of the SIM card 2 shown in FIG. 4C are used as examples. An example in which the specified value A1 is 2, and both the periodicity duration of the time domain resource 1 and the periodicity duration of the time domain resource 2 are 5 ms is used for description. The slot 0 to the slot 19 in the time domain resource 1 are in the radio frame 1, and the slot 0 to the slot 19 in the time domain resource 2 are in the radio frame 2.

Based on the execution logic of the foregoing scenario (C), the UE 30 determines, in a slot 8 in the time domain resource 2, whether a slot 9 (namely, the slot 2) in the time domain resource 2 is an uplink slot or a flexible slot. If the slot 9 (namely, the slot 2) in the time domain resource 2 is an uplink slot or a flexible slot, the UE 30 determines whether the UL grant information (namely, the UL grant information 1) corresponding to the slot 9 in the time domain resource 2 is received. If the UE 30 determines that the UL grant information 1 is received at a time point that a slot 6 in the time domain resource 2 is in, and the UL grant information 1 indicates the UE 30 to send the uplink data via the SIM card 2 in the slot 9 (namely, the slot 2) in the time domain resource 2, the UE 30 determines: (1) whether the uplink channel is occupied by the SIM card 1; and (2) whether the UE 30 sends the uplink data via the SIM card 1 in the slot 9 in the time domain resource 1.

When the UE 30 determines that the UE 30 receives the UL grant information 2 sent by the base station 10, and the UL grant information 2 indicates that the UE 30 sends the uplink data via the SIM card 1 on a symbol 0 to a symbol 7 (which may be abbreviated as s0 to s7) of the slot 9 (namely, the slot 3) in the time domain resource 1, the UE 30 may enable the SIM card 2 to occupy the uplink channel in time that a symbol 9 to a symbol 13 (which may be abbreviated as s9 to s13) of the slot 9 of time domain resource 1 are in, so that the UE 30 may send the uplink data via the SIM card 2 on the symbol s9 to the symbol s13 of the slot 9 in the time domain resource 2. The switching time of the uplink channel needs to occupy one symbol, namely, s8.

In another example, the switching time of the uplink channel may also occupy one GI, two symbols, three symbols, or the like. This is not limited in this application.

It should be noted that in this example, the UE 30 does not send the uplink data via the SIM card 1 in the slot 1, the slot 2 is the slot 9 in the time domain resource 2, the slot 3 is the slot 9 in the time domain resource 1, the slot 2 and the slot 3 are in a same specified time period (that is, in the slot 9 to the slot 24), and the time of the slot 2 is same as the time of the slot 3.

However, in this example, the UE 30 may also send the uplink data via the SIM card 1 in the slot 1, the slot 1 is before the slot 2 and the slot 3, and the slot 1, the slot 2, and the slot 3 are in a specified time period in which the slot 1 is used as a start time point and duration is specified duration.

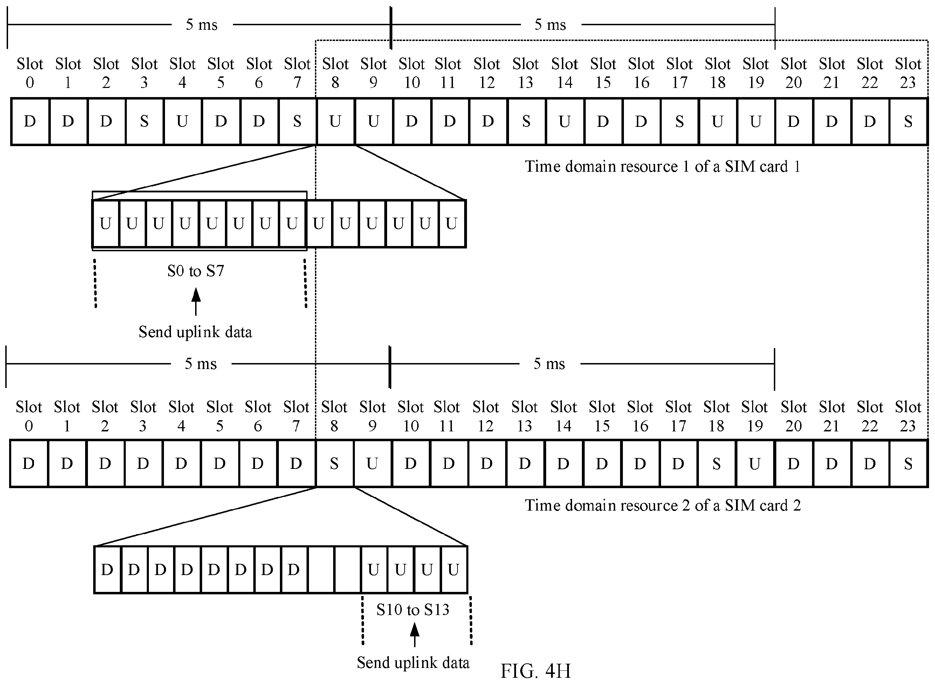

For another example, as shown in FIG. 4H, the time domain resource 1 of the SIM card 1 shown in FIG. 4B and the time domain resource 2 of the SIM card 2 shown in FIG. 4C are used as examples. An example in which the specified value A1 is 2, and both the periodicity duration of the time domain resource 1 and the periodicity duration of the time domain resource 2 are 5 ms is used for description. The slot 0 to the slot 19 in the time domain resource 1 are in the radio frame 1, and the slot 0 to the slot 19 in the time domain resource 2 are in the radio frame 2.

Based on the execution logic of the foregoing scenario (C), the UE 30 determines, in a slot 7 in the time domain resource 2, whether a slot 8 (namely, the slot 2) in the time domain resource 2 is an uplink slot or a flexible slot. If the slot 8 (namely, the slot 2) in the time domain resource 2 is an uplink slot or a flexible slot, the UE 30 determines whether the UL grant information (namely, the UL grant information 1) corresponding to the slot 8 in the time domain resource 2 is received. If the UE 30 determines that the UL grant information 1 is received at a time point that a slot 5 in the time domain resource 2 is in, and the UL grant information 1 indicates the UE 30 to send the uplink data via the SIM card 2 in the slot 8 in the time domain resource 2, the UE 30 determines: (1) whether the uplink channel is occupied by the SIM card 1; and (2) whether the UE 30 sends the uplink data via the SIM card 1 in the slot 8 in the time domain resource 1.

When the UE 30 determines that the UE 30 receives the UL grant information 2 sent by the base station 10, and the UL grant information 2 indicates that the UE 30 sends the uplink data via the SIM card 1 on a symbol 0 to a symbol 7 (which may be abbreviated as s0 to s7) in the slot 8 (namely, the slot 3) in the time domain resource 1, the UE 30 may enable the SIM card 2 to occupy the uplink channel in time that a symbol 10 to a symbol 13 (which may be abbreviated as s10 to s13) of the slot 8 of time domain resource 1 are in, so that the UE 30 may send the uplink data via the SIM card 2 on the symbol s10 to the symbol s13 of the slot 8 in the time domain resource 2. The switching time of the uplink channel needs to occupy one symbol, namely, s8. The symbol s9 in the slot 8 in the time domain resource 2 is used as a guard interval, and therefore the uplink data cannot be sent.

It should be noted that in this example, the UE 30 does not send the uplink data via the SIM card 1 in the slot 1, the slot 2 is the slot 8 in the time domain resource 2, the slot 3 is the slot 8 in the time domain resource 1, the slot 2 and the slot 3 are in a same specified time period (that is, in the slot 8 to the slot 23), and the time of the slot 2 is same as the time of the slot 3.

However, in this example, the UE 30 may also send the uplink data via the SIM card 1 in the slot 1, the slot 1 is before the slot 2 and the slot 3, and the slot 1, the slot 2, and the slot 3 are in a specified time period in which the slot 1 is used as a start time point and duration is specified duration.

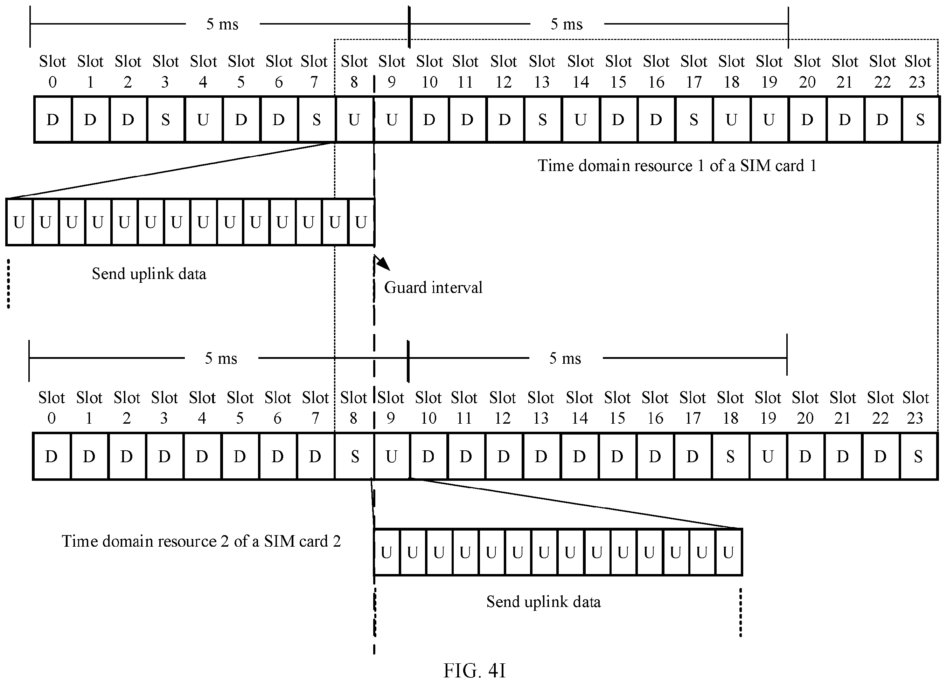

For another example, as shown in FIG. 4I, the time domain resource 1 of the SIM card 1 shown in FIG. 4B and the time domain resource 2 of the SIM card 2 shown in FIG. 4C are used as examples. An example in which the specified value A1 is 2, and both the periodicity duration of the time domain resource 1 and the periodicity duration of the time domain resource 2 are 5 ms is used for description. The slot 0 to the slot 19 in the time domain resource 1 are in the radio frame 1, and the slot 0 to the slot 19 in the time domain resource 2 are in the radio frame 2.

First, the UE 30 has sent the uplink data to the base station 10 via the SIM card 1 in the slot 8 (namely, the slot 1) in the time domain resource 1.

Based on the execution logic of the foregoing scenario (C), the UE 30 determines, in a slot 8 in the time domain resource 2, whether a slot 9 (namely, the slot 2) in the time domain resource 2 is an uplink slot or a flexible slot. If the slot 9 (namely, the slot 2) in the time domain resource 2 is an uplink slot or a flexible slot, the UE 30 determines whether the UL grant information (namely, the UL grant information 1) corresponding to the slot 9 in the time domain resource 2 is received. If the UE 30 determines that the UL grant information 1 is received at a time point that a slot 6 in the time domain resource 2 is in, and the UL grant information 1 indicates the UE 30 to send the uplink data via the SIM card 2 in the slot 9 in the time domain resource 2, the UE 30 determines: (1) whether the uplink channel is occupied by the SIM card 1; and (2) whether the UE 30 sends the uplink data via the SIM card 1 in the slot 9 in the time domain resource 1.

When the UE 30 determines that the UL grant information 2 sent by the base station 10 is not received, and therefore determines that the UE 30 does not send the uplink data via the SIM card 1 in the slot 9 (namely, the slot 3) in the time domain resource 1, the UE 30 may switch the uplink channel to the SIM card 2, so that the UE 30 may send the uplink data via the SIM card 2 in the slot 9 in the time domain resource 2. The switching time of the uplink channel is a guard interval between the last symbol in the slot 1 and the first symbol in the slot 3. The UL grant information 2 is used to indicate that the UE 30 sends the uplink data via the SIM card 1 in the slot 9 in the time domain resource 1.

In a possible implementation, the switching time of the uplink channel may be first N symbols in the slot 2. Herein, that the switching time of the uplink channel is first two symbols in the slot 2 is used as an example. The UE 30 switches the uplink channel from the SIM card 1 to the SIM card 2 on s0 and s1 in the slot 9 in the time domain resource 2. Therefore, s2 to s13 of the slot resource 2 are used to send the uplink data.

It should be noted that the slot 1 is the slot 8 in the time domain resource 1, the slot 2 is the slot 9 in the time domain resource 2, the slot 3 is the slot 9 in the time domain resource 1, the slot 1, the slot 2, and the slot 3 are in the time period 1 (that is, in the slot 8 to the slot 23), and the time of the slot 2 is the same as the time of the slot 3.

In a possible implementation, the UE 30 has obtained and stored the index 1 in S403 above, and has sent the uplink data via the SIM card 1 in the slot 1. When the UE 30 receives the UL grant information 1 sent by the base station 20, the UL grant information 1 indicates that the UE 30 sends the uplink data to the base station 20 via the SIM card 2 in the slot 2 of the radio frame 2 in the time domain resource 2. In this case, if the UE 30 determines that the time point that the slot 2 is in exists in a record of the index 1, the UE 30 switches the uplink channel to the SIM card 2, so that the UE 30 may send the uplink data to the base station 20 via the SIM card 2 at the time point that one or more uplink symbols in the slot 2 are in. The slot 1 and the slot 2 are in the time period 1, and the slot 2 may be an uplink slot, or may be a flexible slot.

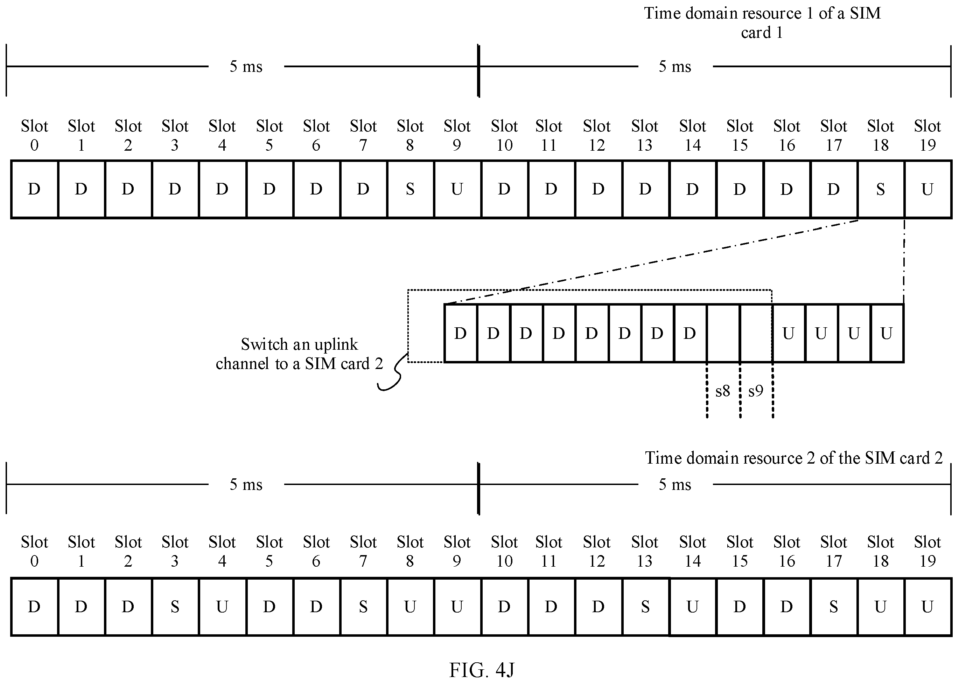

For example, as shown in FIG. 4J, first, the UE 30 has sent the uplink data to the base station 10 via the SIM card 1 in the slot 9 (namely, the slot 1) in the time domain resource 1.

The UE 30 receives the UL grant information 1 at a time point that the slot 15 in the time domain resource 2 is in, and the UL grant information 1 indicates that the UE 30 sends the uplink data via the SIM card 2 in the slot 18 (namely, the slot 2) in the time domain resource 2.

If the UE 30 determines that the time point that the slot 18 in the time domain resource 2 is in exists in the index 1, the UE 30 may switch the uplink channel to the SIM card 2 in the time that a symbol 0 to a symbol 9 (which may be abbreviated as s0 to s9) of the slot 18 in the time domain resource 1 is in, so that the UE 30 may send the uplink data via the SIM card 2 on the symbol s0 to the symbol s9 of the slot 18 in the time domain resource 2.

It should be noted that in this example, the UE 30 may send the uplink data to the base station 10 via the SIM card 1 not in the slot 1, that is, the UE 30 may not perform step S404.

It should be noted that time of two slots is same includes two cases: (1) start time and end time of the two slots are the same; and (2) start time and end time of the two slots are different, but the two slots overlap in terms of time. In this case, time domain resources that are configured by the access network device and that respectively correspond to the two SIM cards are not completely aligned.

S407: When the UE 30 determines that the uplink data may be sent via the SIM card 2 through the uplink channel in the slot 2, the UE 30 sends the uplink data via the SIM card 2 in the slot 2.

Specifically, a specific implementation of this step may be divided into the following several cases based on different allowed switching time of the uplink channel:
(A) The allowed switching time of the uplink channel is associated with a periodicity in the time domain resource.
   The UE 30 may send, in the slot 2, the uplink data to the base station 20 via the SIM card 2 based on PUSCH resource information allocated by the base station 20.
(B) The allowed switching time of the uplink channel is at a slot level.
   The UE 30 may send, in the slot 2, the uplink data to the base station 20 via the SIM card 2 based on PUSCH resource information allocated by the base station 20.
(C) The allowed switching time of the uplink channel is at a symbol level.

The UE 30 may send the uplink data to the base station 20 via the SIM card 2 based on PUSCH resource information allocated by the base station 20 on one or more symbols in the slot 2.

It may be understood that the UE 30 may be referred to as an electronic device.

The base station 10 may be referred to as a first access network device, the time domain resource configuration information 1 may be referred to as first time domain resource configuration information, the time domain resource 1 may be referred to as a first time domain resource, the SIM card 1 may be referred to as a first SIM card, and the first time domain resource configuration information is used by the first access network device to configure a slot format of the first time domain resource for the first SIM card.

The base station 20 may be referred to as a second access network device, the time domain resource configuration information 2 may be referred to as second time domain resource configuration information, the time domain resource 2 may be referred to as a second time domain resource, the SIM card 2 may be referred to as a second SIM card, and the second time domain resource configuration information is used by the second access network device to configure a slot format of the second time domain resource for the second SIM card.

The UE 30 sends the uplink data to the base station 10 via the SIM card 1, that is, the UE 30 sends the uplink data to the base station 10 corresponding to the SIM card 1.

The UE 30 sends the uplink data to the base station 20 via the SIM card 2, that is, the UE 30 sends the uplink data to the base station 20 corresponding to the SIM card 2.

The time period 1 may be referred to as a first time period; the uplink channel may be referred to as a radio frequency transmit channel; the first time period is a time period in which a first slot is used as a start time point and duration is specified duration, and the specified duration may be less than or equal to duration of one radio frame (for example, is duration of half a radio frame); and the index 1 may be referred to as a first index.

The slot 1 may be referred to as a first slot; the slot 2 may be referred to as a second slot in the scenarios (A) and (B), and may be referred to as a fifth slot in the scenario (C) when the uplink data is not sent in the slot 1; and the slot 3 may be referred to as a third slot in the scenarios (A) and (B), and may be referred to as a fourth slot in the scenario (C) when the uplink data is not sent in the slot 1.

The uplink channel is switched to the SIM card 2, that is, the uplink channel is switched to the network corresponding to the SIM card 2 for occupation.

The uplink channel is occupied by the SIM card 1, that is, the radio frequency transmit channel is occupied by the network corresponding to the SIM card 1.

It should be noted that, in the foregoing embodiment, when duration of the first periodicity is 5 milliseconds, a start moment of the first periodicity may be 0 milliseconds or 5 milliseconds of the radio frame; or when duration of the first periodicity is 2.5 milliseconds, a start moment of the first periodicity may be 0 milliseconds, 2.5 milliseconds, 5 milliseconds, or 7.5 milliseconds of the radio frame. The second periodicity may be a next periodicity adjacent to the first periodicity.

Next, a possible product form of the UE 30 provided in this embodiment of this application is described.

It should also be understood that the following descriptions are merely examples, and the product form of the UE 30 in embodiments of this application is not limited thereto.

In a possible product form, the UE 30 in embodiments of this application may be implemented by using a general bus architecture. FIG. 5 is a schematic diagram of a structure of a communication apparatus 1000 according to an embodiment of this application. The communication apparatus 1000 may be UE or an apparatus in the UE.

As shown in FIG. 5, the communication apparatus 1000 includes a processor 1001, a transceiver 1002 that is internally connected to and communicates with the processor, an antenna 1003, a memory 1004, a SIM card 1 module 1005, and a SIM card 2 module 1006. The processor 1001 is a general-purpose processor, a dedicated processor, or the like. For example, the processor 1001 may be a baseband processor or a central processing unit. The baseband processor may be configured to process a communication protocol and communication data. The central processing unit may be configured to control the communication apparatus (for example, a base station, a baseband chip, a terminal, a terminal chip, a DU, or a CU), execute a computer program, and process data of the computer program.

The transceiver 1002 may be referred to as a transceiver unit, a transceiver machine, a transceiver circuit, or the like, and is configured to implement a transceiver function. The transceiver 1002 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1000 may further include an antenna 1003 and/or a radio frequency unit (not shown in the figure). The antenna 1003 and/or the radio frequency unit may be located inside the communication apparatus 1000, or may be separated from the communication apparatus 1000. In other words, the antenna 1003 and/or the radio frequency unit may be deployed remotely or in a distributed manner. The antenna 1003 may be configured to transmit and receive electromagnetic wave signals.

The communication apparatus 1000 may include one or more memories 1004. The memory 1004 may store instructions. The instructions may be a computer program. The computer program may be run on the communication apparatus 1000, so that the communication apparatus 1000 performs the method described in the foregoing method embodiments. Optionally, the memory 1004 may further store data. The communication apparatus 1000 and the memory 1004 may be separately disposed, or may be integrated.

The processor 1001, the transceiver 1002, and the memory 1004 may be connected through a communication bus.

In this embodiment of this application, the time domain resource configuration method, the time domain resource management method, and instructions for performing signal sending and receiving based on the time domain configuration information may be stored in the memory 1004 and the processor 1001.

In this embodiment of this application, the communication apparatus 1000 may receive cell-level time domain configuration information in a broadcast channel through the transceiver 1002, the antenna 1003, and/or the radio frequency unit. Then, the communication apparatus 1000 may perform signal receiving and/or signal sending based on a type of a time domain resource indicated by the time domain resource configuration information through the transceiver 1002, the antenna 1003, and/or the radio frequency unit. Specifically, in an UL slot or symbol, the transceiver 1002, the antenna 1003, and/or the radio frequency unit may send an uplink signal to a base station 10 and a base station 20 through an UL carrier. In a DL slot or symbol, the transceiver 1002, the antenna 1003, and/or the radio frequency unit may receive, through a DL carrier, a signal delivered by the base station 10 and the base station 20.

In this embodiment of this application, when a SIM card 2 needs to perform uplink scheduling in a specified slot, and when it is determined that a SIM card 1 does not perform uplink scheduling in the slot, the processor 1001 may switch an uplink channel to the SIM card 2 to implement uplink scheduling. For specific descriptions, refer to the foregoing descriptions of the embodiment shown in FIG. 4A.

In this embodiment of this application, the SIM card 1 module 1005 may run a high-priority service (for example, a call service) whose real-time requirement is high, and the SIM card 2 module 1006 may run a low-priority service (for example, web browsing) whose real-time requirement is low. The SIM card 1 module 1005 may communicate with the base station 10, and the SIM card 2 module 1006 may communicate with the base station 20. The SIM card 1 module 1005 and the SIM card 2 module 1006 may simultaneously perform a communication service. When only one radio frequency transmit channel is configured in the transceiver 1002, the SIM card 1 module 1005 and the SIM card 2 module 1006 may transmit a signal to the base station through a same radio frequency transmit channel in different time periods in a time division multiplexing manner.

A scope of the communication apparatus described in this application is not limited thereto, and a structure of the communication apparatus may not be limited in FIG. 5. The communication apparatus may be a stand-alone device or may be part of a larger device. For example, the communication apparatus may be:
(1) a stand-alone integrated circuit IC, a chip, a chip system, or a subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver machine, a terminal, a smart terminal, a cellular phone, a wireless device, a handset, a mobile unit, a vehicle-mounted device, a network device, a cloud device, an artificial intelligent device, or the like; and
(6) others, and the like.

Next, a network apparatus 2000 that can enable an access network device (for example, a base station 10) to implement the uplink time domain resource management method provided in this application is described.

The network apparatus 2000 shown in FIG. 6 may be the access network device (the base station 10 or the base station 20) described in this embodiment of this application, or may be a component, in the access network device, that implements the foregoing method, or may be a chip used in the access network device. The chip may be a system-on-a-chip (System-On-a-Chip, SOC), a baseband chip having a communication function, or the like.

As shown in FIG. 6, the network apparatus 2000 includes a processor 2001 and a transceiver 2002 that is internally connected to and communicates with the processor. Optionally, the network apparatus 2000 may further include an antenna 2003 and/or a radio frequency unit (not shown in the figure). Optionally, the network apparatus 2000 may include one or more memories 2004. The memory 2004 may store instructions. The instructions may be a computer program. The computer program may be run on the network apparatus 2000, so that the network apparatus 2000 performs the method described in the foregoing method embodiments.

In this embodiment of this application, the time domain resource configuration method, the time domain resource management method, and instructions for performing signal sending and receiving based on the time domain resource configuration information may be stored in the memory 2004 and the processor 2001.

In this embodiment of this application, the network apparatus 2000 may broadcast cell-level time domain resource configuration information to a terminal device in a cell through the transceiver 2002, the antenna 2003, and/or the radio frequency unit. Then, after the terminal device accesses the network apparatus 2000, the network apparatus 2000 may perform signal receiving and/or signal sending based on a type of a time domain resource indicated by the time domain resource configuration information. For example, in an UL slot or symbol, the transceiver 2002, the antenna 2003, and/or the radio frequency unit may receive, through an UL carrier, an uplink signal sent by the terminal device. In a DL slot or symbol, the transceiver 2002, the antenna 2003, and/or the radio frequency unit may send a downlink signal to the terminal device through a DL carrier.

The processor in this embodiment of this application may include but is not limited to at least one of the following: a central processing unit (central processing unit, CPU), a microprocessor, a digital signal processor (DSP), a microcontroller unit (microcontroller unit, MCU), an artificial intelligence processor, or various types of computing devices for running software. Each type of computing device may include one or more cores for executing software instructions to perform an operation or processing. The processor may be an independent semiconductor chip, or may be integrated with another circuit into a semiconductor chip. For example, the processor may form a SoC (system-on-a-chip) with another circuit (such as a codec circuit, a hardware acceleration circuit, or various bus and interface circuits). Alternatively, the processor may be integrated into an ASIC as a built-in processor of the ASIC, and the ASIC integrated with the processor may be separately packaged, or may be packaged together with another circuit. In addition to the core for executing software instructions to perform the operation or processing, the processor may further include a necessary hardware accelerator, such as a field programmable gate array (field programmable gate array, FPGA), a PLD (programmable logic device), or a logic circuit that implements a dedicated logic operation.

The memory in embodiments of this application may include at least one of the following types: a read-only memory (read-only memory, ROM) or another type of static storage device that can store static information and instructions, and a random access memory (random access memory, RAM) or another type of dynamic storage device that can store information and instructions, or may be an electrically erasable programmable-only memory (Electrically erasable programmabler-only memory, EEPROM). In some scenarios, the memory may alternatively be a compact disc read-only memory (compact disc read-only memory, CD ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed to a computer. However, the memory is not limited thereto.

According to the context, the term "when..." used in the foregoing embodiments may be interpreted as a meaning of "if...", "after...", "in response to determining...", or "in response to detecting...". Similarly, according to the context, the phrase "when it is determined that..." or "if (a stated condition or event) is detected" may be interpreted as a meaning of "when it is determined that...", "in response to determining...", "when (a stated condition or event) is detected", or "in response to detecting (a stated condition or event)".

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and performed on a computer, all or some of flows or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, coaxial-cable, optical-fiber, or digital-subscriber-line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a soft disk, a hard disk, or a magnetic tape), an optical medium (for example, a DVD), a semiconductor medium (for example, an SSD), or the like.

A person of ordinary skill in the art may understand that all or some of the procedures of the methods in embodiments may be implemented by a computer program instructing relevant hardware. The program may be stored in a computer-readable storage medium. When the program is executed, the procedures in the method embodiments may be performed. The foregoing storage medium includes any medium that can store program code, such as a ROM, a random access memory RAM, a magnetic disk, or an optical disc.

## Claims

1. A time domain resource management method, applied to an electronic device (30), wherein the electronic device supports two SIM cards, the electronic device is configured with only one radio frequency transmit channel, and the method comprises:
receiving (S401), by the electronic device (30), first time domain resource configuration information sent by a first access network device (10), wherein the first time domain resource configuration information is used by the first access network device to configure a slot format of a first time domain resource for a first SIM card;
receiving (S402), by the electronic device (30), second time domain resource configuration information sent by a second access network device (20), wherein the second time domain resource configuration information is used by the second access network device to configure a slot format of a second time domain resource for a second SIM card;
sending (S404), by the electronic device (30) in a first slot of the first time domain resource, uplink data to the first access network device (10) corresponding to the first SIM card; and
sending (S407), by the electronic device (30) in a second slot of the second time domain resource, uplink data to the second access network device (20) corresponding to the second SIM card, wherein
the electronic device (30) transmits a high-priority service in the first slot, and transmits a low-priority service in the second slot, the second slot is in a first time period and is after the first slot, the first time period is a time period in which the first slot is used as a start time point and duration is specified duration, and the specified duration is less than or equal to duration of one radio frame.

2. The method according to claim 1, wherein the specified duration is duration of half a radio frame.

3. The method according to claim 1, wherein the first slot and the second slot are separated by time of one slot.

4. The method according to any one of claims 1 to 3, wherein before the sending (S407), by the electronic device (30) in a second slot of the second time domain resource, uplink data to the second access network device (20) corresponding to the second SIM card, the method further comprises:
switching, by the electronic device (30), the radio frequency transmit channel to a network corresponding to the second SIM card for occupation at a time point that a previous slot of the second slot is in when the radio frequency transmit channel is occupied by a network corresponding to the first SIM card.

5. The method according to claim 4, wherein before the switching, by the electronic device (30), the radio frequency transmit channel to a network corresponding to the second SIM card for occupation at a time point that a previous slot of the second slot is in when the radio frequency transmit channel is occupied by a network corresponding to the first SIM card, the method further comprises:
determining, by the electronic device (30), whether to perform the switching operation of the radio frequency transmit channel.

6. The method according to claim 5, wherein the determining, by the electronic device (30), whether to perform the switching operation of the radio frequency transmit channel comprises: determining, by the electronic device in time that the previous slot of the second slot is in, whether to perform the switching operation of the radio frequency transmit channel.

7. The method according to claim 5, wherein the determining, by the electronic device (30), whether to perform the switching operation of the radio frequency transmit channel specifically comprises:
determining, by the electronic device (30) in time that a current slot in the second time domain resource is in, whether a next slot of the current slot is an uplink slot or a flexible slot;
when the electronic device (30) determines that the next slot of the current slot is the uplink slot or the flexible slot, determining, by the electronic device, whether UL grant information corresponding to the next slot of the current slot is received; and
when the electronic device (30) determines that the UL grant information corresponding to the next slot of the current slot is received, determining, by the electronic device, whether the radio frequency transmit channel is occupied by the network corresponding to the first SIM card, whether the electronic device sends the uplink data via the first SIM card in the time that the current slot is in, and whether the electronic device sends the uplink data via the first SIM card in time that the next slot of the current slot is in.

8. The method according to claim 5 or 7, wherein the determining, by the electronic device (30), whether to perform the switching operation of the radio frequency transmit channel comprises: determining, by the electronic device in each incoming slot, whether to perform the switching operation of the radio frequency transmit channel.

9. The method according to claim 1, wherein time of the first slot is adjacent to time of the second slot.

10. The method according to claim 9, wherein the sending (S407), by the electronic device (30) in a second slot of the second time domain resource, uplink data to the second access network device (20) corresponding to the second SIM card specifically comprises:
when the electronic device (30) determines not to send the uplink data in a third slot of the first time domain resource, switching, by the electronic device, the radio frequency transmit channel; and
sending, by the electronic device (30) in the second slot of the second time domain resource, the uplink data to the second access network device (20) corresponding to the second SIM card, wherein
the time of the second slot is the same as time of the third slot.

11. The method according to claim 10, wherein time occupied by the electronic device (30) to switch the radio frequency transmit channel is a guard interval between a last symbol in the first slot and a first symbol in the third slot.

12. The method according to claim 10, wherein time occupied by the electronic device (30) to switch the radio frequency transmit channel is first N symbols in the second slot; and
the sending, by the electronic device (30) in the second slot of the second time domain resource, the uplink data to the second access network device (20) corresponding to the second SIM card specifically comprises:
sending, by the electronic device (30) on last (14-N) symbols in the second slot, the uplink data to the second access network device (20) corresponding to the second SIM card, wherein N is less than 14.

13. The method according to claim 1, wherein before the sending (S404), by the electronic device (30) in a first slot of the first time domain resource, uplink data to the first access network device (10) corresponding to the first SIM card, the method further comprises:
obtaining (S403), by the electronic device (30), a time point at which there are two adjacent downlink slots in the first time domain resource, and a second downlink slot corresponds to an uplink slot in the second time domain resource; and/or a time point at which there are two adjacent downlink slots in the first time domain resource, and a second downlink slot corresponds to a flexible slot in the second time domain resource; and/or a time point at which the first time domain resource is a non-uplink symbol in a flexible slot, and the second time domain resource is a symbol in an uplink slot; and/or a time point at which the first time domain resource is a non-uplink symbol in a flexible slot, and the second time domain resource is an uplink symbol in the flexible slot;
storing, by the electronic device (30), the obtained time point as a first index; and
the sending (S407), by the electronic device (30) in a second slot of the second time domain resource, uplink data to the second access network device (20) corresponding to the second SIM card specifically comprises:
when the electronic device (30) determines that a time point that the second slot is in exists in the first index, sending, by the electronic device in the second slot of the second time domain resource, the uplink data to the second access network device (20) corresponding to the second SIM card.

14. An electronic device (30, 1000), comprising one or more processors (1001), one or more memories (1004), a modem, a radio frequency transmit path (1002), a first SIM card (1005), and a second SIM card (1006), wherein the one or more memories are coupled to the modem, the one or more memories are configured to store computer program code, and the computer program code comprises computer instructions; and when the modem executes the computer instructions, the electronic device is enabled to perform the method according to any one of claims 1 to 13.

15. A computer-readable storage medium, comprising computer instructions, wherein when the computer instructions are run on the electronic device of claim 14, the electronic device is enabled to perform the method according to any one of claims 1 to 13.

## Patentansprüche

1. Zeitbereichs-Ressourcenverwaltungsverfahren, angewendet auf eine elektronische Vorrichtung (30), wobei die elektronische Vorrichtung zwei SIM-Karten unterstützt, die elektronische Vorrichtung mit nur einem Hochfrequenz-Sendekanal konfiguriert ist und das Verfahren Folgendes umfasst:
Empfangen (S401) von ersten Zeitbereichs-Ressourcenkonfigurationsinformationen durch die elektronische Vorrichtung (30), die von einer ersten Zugangsnetzwerkvorrichtung (10) gesendet werden, wobei die ersten Zeitbereichs-Ressourcenkonfigurationsinformationen von der ersten Zugangsnetzwerkvorrichtung verwendet werden, um ein Slot-Format einer ersten Zeitbereichsressource für eine erste SIM-Karte zu konfigurieren;
Empfangen (S402) von zweiten Zeitbereichs-Ressourcenkonfigurationsinformationen durch die elektronische Vorrichtung (30), die von einer zweiten Zugangsnetzwerkvorrichtung (20) gesendet werden, wobei die zweiten Zeitbereichs-Ressourcenkonfigurationsinformationen von der zweiten Zugangsnetzwerkvorrichtung verwendet werden, um ein Slot-Format einer zweiten Zeitbereichsressource für eine zweite SIM-Karte zu konfigurieren;
Senden (S404) von Uplink-Daten durch die elektronische Vorrichtung (30) in einem ersten Slot der ersten Zeitbereichsressource an die erste Zugangsnetzwerkvorrichtung (10) entsprechend der ersten SIM-Karte; und
Senden (S407) von Uplink-Daten durch die elektronische Vorrichtung (30) in einem zweiten Slot der zweiten Zeitbereichsressource an die zweite Zugangsnetzwerkvorrichtung (20) entsprechend der zweiten SIM-Karte, wobei
die elektronische Vorrichtung (30) einen Dienst mit hoher Priorität im ersten Slot überträgt und einen Dienst mit niedriger Priorität im zweiten Slot überträgt, der zweite Slot in einem ersten Zeitraum liegt und nach dem ersten Slot liegt, der erste Zeitraum ein Zeitraum ist, in dem der erste Slot als Startzeitpunkt verwendet wird und die Dauer eine festgelegte Dauer ist, und die festgelegte Dauer kleiner oder gleich der Dauer eines Funkrahmens ist.

2. Verfahren nach Anspruch 1, wobei die festgelegte Dauer die Dauer eines halben Funkrahmens ist.

3. Verfahren nach Anspruch 1, wobei der erste Slot und der zweite Slot durch die Zeitdauer eines Slots getrennt sind.

4. Verfahren nach einem der Ansprüche 1 bis 3, wobei vor dem Senden (S407) von Uplink-Daten durch die elektronische Vorrichtung (30) in einem zweiten Slot der zweiten Zeitbereichsressource an die zweite Zugangsnetzwerkvorrichtung (20) entsprechend der zweiten SIM-Karte das Verfahren ferner umfasst:
Umschalten des Hochfrequenz-Sendekanals durch die elektronische Vorrichtung (30) auf ein Netzwerk, das der zweiten SIM-Karte entspricht, zur Belegung zu einem Zeitpunkt, zu dem sich ein vorheriger Slot des zweiten Slots befindet, wenn der Hochfrequenz-Sendekanal durch ein Netzwerk belegt ist, das der ersten SIM-Karte entspricht.

5. Verfahren nach Anspruch 4, wobei das Verfahren vor dem Umschalten des Hochfrequenz-Sendekanals durch die elektronische Vorrichtung (30) auf ein Netzwerk, das der zweiten SIM-Karte entspricht, zur Belegung zu einem Zeitpunkt, an dem sich ein vorangegangener Schlitz des zweiten Schlitzes befindet, wenn der Hochfrequenz-Sendekanal durch ein Netzwerk belegt ist, das der ersten SIM-Karte entspricht, ferner umfasst:
Bestimmen durch die elektronische Vorrichtung (30), ob der Umschaltvorgang des Hochfrequenz-Sendekanals durchgeführt werden soll.

6. Verfahren nach Anspruch 5, wobei das Bestimmen durch die elektronische Vorrichtung (30), ob der Umschaltvorgang des Hochfrequenz-Sendekanals durchgeführt werden soll, umfasst: Bestimmen durch die elektronische Vorrichtung in der Zeit, in der sich der vorangegangene Schlitz des zweiten Schlitzes befindet, ob der Umschaltvorgang des Hochfrequenz-Sendekanals durchgeführt werden soll.

7. Verfahren nach Anspruch 5, wobei das Bestimmen durch die elektronische Vorrichtung (30), ob der Umschaltvorgang des Hochfrequenz-Sendekanals durchgeführt werden soll, spezifisch umfasst:
Bestimmen durch die elektronische Vorrichtung (30) in der Zeit, in der sich ein aktueller Schlitz in der zweiten Zeitbereichsressource befindet, ob ein nächster Schlitz des aktuellen Schlitzes ein Uplink-Schlitz oder ein flexibler Schlitz ist;
wenn die elektronische Vorrichtung (30) bestimmt, dass der nächste Schlitz des aktuellen Schlitzes der Uplink-Schlitz oder der flexible Schlitz ist, Bestimmen durch die elektronische Vorrichtung, ob UL-Grant-Informationen, die dem nächsten Schlitz des aktuellen Schlitzes entsprechen, empfangen werden; und
wenn die elektronische Vorrichtung (30) bestimmt, dass die UL-Grant-Informationen, die dem nächsten Schlitz des aktuellen Schlitzes entsprechen, empfangen werden, Bestimmen durch die elektronische Vorrichtung, ob der Hochfrequenz-Sendekanal durch das Netzwerk belegt ist, das der ersten SIM-Karte entspricht, ob die elektronische Vorrichtung die Uplink-Daten über die erste SIM-Karte in der Zeit sendet, in der sich der aktuelle Schlitz befindet, und ob die elektronische Vorrichtung die Uplink-Daten über die erste SIM-Karte in der Zeit sendet, in der sich der nächste Schlitz des aktuellen Schlitzes befindet.

8. Verfahren nach Anspruch 5 oder 7, wobei das Bestimmen durch die elektronische Vorrichtung (30), ob der Umschaltvorgang des Hochfrequenz-Sendekanals durchgeführt werden soll, umfasst: Bestimmen durch die elektronische Vorrichtung in jedem eingehenden Schlitz, ob der Umschaltvorgang des Hochfrequenz-Sendekanals durchgeführt werden soll.

9. Verfahren nach Anspruch 1, wobei die Zeit des ersten Schlitzes an die Zeit des zweiten Schlitzes angrenzt.

10. Verfahren nach Anspruch 9, wobei das Senden (S407) der Uplink-Daten durch die elektronische Vorrichtung (30) in einem zweiten Schlitz der zweiten Zeitdomänenressource an die dem zweiten SIM-Karten-Zugangsnetzwerk zugehörige zweite Zugangsvorrichtung (20) spezifisch umfasst:
wenn die elektronische Vorrichtung (30) bestimmt, die Uplink-Daten nicht in einem dritten Schlitz der ersten Zeitdomänenressource zu senden, Umschalten des Hochfrequenz-Übertragungskanals durch die elektronische Vorrichtung; und
Senden der Uplink-Daten durch die elektronische Vorrichtung (30) im zweiten Schlitz der zweiten Zeitdomänenressource an die dem zweiten SIM-Karten-Zugangsnetzwerk zugehörige zweite Zugangsvorrichtung (20), wobei
die Zeit des zweiten Schlitzes dieselbe ist wie die Zeit des dritten Schlitzes.

11. Verfahren nach Anspruch 10, wobei die von der elektronischen Vorrichtung (30) zum Umschalten des Hochfrequenz-Übertragungskanals beanspruchte Zeit ein Schutzintervall zwischen einem letzten Symbol im ersten Schlitz und einem ersten Symbol im dritten Schlitz ist.

12. Verfahren nach Anspruch 10, wobei die von der elektronischen Vorrichtung (30) zum Umschalten des Hochfrequenz-Übertragungskanals beanspruchte Zeit die ersten N Symbole im zweiten Schlitz sind; und
das Senden der Uplink-Daten durch die elektronische Vorrichtung (30) im zweiten Schlitz der zweiten Zeitdomänenressource an die dem zweiten SIM-Karten-Zugangsnetzwerk zugehörige zweite Zugangsvorrichtung (20) spezifisch umfasst:
Senden der Uplink-Daten durch die elektronische Vorrichtung (30) auf den letzten (14-N) Symbolen im zweiten Schlitz an die dem zweiten SIM-Karten-Zugangsnetzwerk zugehörige zweite Zugangsvorrichtung (20), wobei N kleiner als 14 ist.

13. Verfahren nach Anspruch 1, wobei vor dem Senden (S404) der Uplink-Daten durch die elektronische Vorrichtung (30) in einem ersten Schlitz der ersten Zeitdomänenressource an die dem ersten SIM-Karten-Zugangsnetzwerk zugehörige erste Zugangsvorrichtung (10) das Verfahren ferner umfasst:
Erlangen (S403) eines Zeitpunkts durch die elektronische Vorrichtung (30), an dem zwei benachbarte Downlink-Schlitze in der ersten Zeitdomänenressource vorhanden sind und ein zweiter Downlink-Schlitz einem Uplink-Schlitz in der zweiten Zeitdomänenressource entspricht; und/oder eines Zeitpunkts, an dem zwei benachbarte Downlink-Schlitze in der ersten Zeitdomänenressource vorhanden sind und ein zweiter Downlink-Schlitz einem flexiblen Schlitz in der zweiten Zeitdomänenressource entspricht; und/oder eines Zeitpunkts, an dem die erste Zeitdomänenressource ein Nicht-Uplink-Symbol in einem flexiblen Schlitz ist und die zweite Zeitdomänenressource ein Symbol in einem Uplink-Schlitz ist; und/oder eines Zeitpunkts, an dem die erste Zeitdomänenressource ein Nicht-Uplink-Symbol in einem flexiblen Schlitz ist und die zweite Zeitdomänenressource ein Uplink-Symbol im flexiblen Schlitz ist;
Speichern des ermittelten Zeitpunkts durch die elektronische Vorrichtung (30) als ersten Index; und
Das Senden (S407) der Uplink-Daten durch die elektronische Vorrichtung (30) in einem zweiten Schlitz der Ressource der zweiten Zeitdomäne an die zweite Zugangsnetzvorrichtung (20), die der zweiten SIM-Karte entspricht, umfasst insbesondere:
wenn die elektronische Vorrichtung (30) bestimmt, dass ein Zeitpunkt, zu dem sich der zweite Schlitz befindet, im ersten Index existiert, Senden der Uplink-Daten durch die elektronische Vorrichtung in dem zweiten Schlitz der Ressource der zweiten Zeitdomäne an die zweite Zugangsnetzvorrichtung (20), die der zweiten SIM-Karte entspricht.

14. Elektronische Vorrichtung (30, 1000), umfassend einen oder mehrere Prozessoren (1001), einen oder mehrere Speicher (1004), ein Modem, einen Hochfrequenz-Übertragungspfad (1002), eine erste SIM-Karte (1005) und eine zweite SIM-Karte (1006), wobei der eine oder die mehreren Speicher mit dem Modem gekoppelt sind, der eine oder die mehreren Speicher dazu konfiguriert sind, einen Computerprogrammcode zu speichern, und der Computerprogrammcode Computeranweisungen umfasst; und wobei, wenn das Modem die Computeranweisungen ausführt, die elektronische Vorrichtung dazu befähigt wird, das Verfahren nach einem der Ansprüche 1 bis 13 durchzuführen.

15. Computerlesbares Speichermedium, umfassend Computeranweisungen, wobei, wenn die Computeranweisungen auf der elektronischen Vorrichtung nach Anspruch 14 ausgeführt werden, die elektronische Vorrichtung dazu befähigt wird, das Verfahren nach einem der Ansprüche 1 bis 13 durchzuführen.

## Revendications

1. Procédé de gestion de ressources dans le domaine temporel, appliqué à un dispositif électronique (30), dans lequel le dispositif électronique prend en charge deux cartes SIM, le dispositif électronique est configuré avec un seul canal de transmission radiofréquence, et le procédé comprend :
la réception (S401), par le dispositif électronique (30), d'informations de configuration de ressources dans le domaine temporel envoyées par un premier dispositif de réseau d'accès (10), dans lequel les informations de configuration de ressources dans le domaine temporel sont utilisées par le premier dispositif de réseau d'accès pour configurer un format d'intervalle (slot format) d'une première ressource dans le domaine temporel pour une première carte SIM ;
la réception (S402), par le dispositif électronique (30), de secondes informations de configuration de ressources dans le domaine temporel envoyées par un second dispositif de réseau d'accès (20), dans lequel les secondes informations de configuration de ressources dans le domaine temporel sont utilisées par le second dispositif de réseau d'accès pour configurer un format d'intervalle (slot format) d'une seconde ressource dans le domaine temporel pour une seconde carte SIM ;
l'envoi (S404), par le dispositif électronique (30) dans un premier intervalle de la première ressource dans le domaine temporel, de données de liaison montante au premier dispositif de réseau d'accès (10) correspondant à la première carte SIM ; et
l'envoi (S407), par le dispositif électronique (30) dans un second intervalle de la seconde ressource dans le domaine temporel, de données de liaison montante au second dispositif de réseau d'accès (20) correspondant à la seconde carte SIM, dans lequel
le dispositif électronique (30) transmet un service de haute priorité dans le premier intervalle, et transmet un service de basse priorité dans le second intervalle, le second intervalle est situé dans une première période temporelle et est postérieur au premier intervalle, la première période temporelle est une période temporelle dans laquelle le premier intervalle est utilisé comme point de départ et la durée est une durée spécifiée, et la durée spécifiée est inférieure ou égale à la durée d'une trame radio.

2. Procédé selon la revendication 1, dans lequel la durée spécifiée est la durée d'une demi-trame radio.

3. Procédé selon la revendication 1, dans lequel le premier intervalle et le second intervalle sont séparés par la durée d'un intervalle.

4. Procédé selon l'une quelconque des revendications 1 à 3, dans lequel avant l'envoi (S407), par le dispositif électronique (30) dans un second intervalle de la seconde ressource dans le domaine temporel, de données de liaison montante au second dispositif de réseau d'accès (20) correspondant à la seconde carte SIM, le procédé comprend en outre :
la commutation, par le dispositif électronique (30), du canal de transmission radiofréquence vers un réseau correspondant à la seconde carte SIM pour occupation à un point temporel situé dans un intervalle précédant le second intervalle lorsque le canal de transmission radiofréquence est occupé par un réseau correspondant à la première carte SIM.

5. Procédé selon la revendication 4, **caractérisé en ce qu'**avant la commutation, par le dispositif électronique (30), du canal de transmission radiofréquence vers un réseau correspondant à la seconde carte SIM pour occupation à un instant où un créneau précédent du second créneau se trouve lorsque le canal de transmission radiofréquence est occupé par un réseau correspondant à la première carte SIM, le procédé comprend en outre :
la détermination, par le dispositif électronique (30), d'effectuer ou non l'opération de commutation du canal de transmission radiofréquence.

6. Procédé selon la revendication 5, **caractérisé en ce que** la détermination, par le dispositif électronique (30), d'effectuer ou non l'opération de commutation du canal de transmission radiofréquence comprend : la détermination, par le dispositif électronique en temps opportun alors que le créneau précédent du second créneau est en cours, d'effectuer ou non l'opération de commutation du canal de transmission radiofréquence.

7. Procédé selon la revendication 5, **caractérisé en ce que** la détermination, par le dispositif électronique (30), d'effectuer ou non l'opération de commutation du canal de transmission radiofréquence comprend spécifiquement :
la détermination, par le dispositif électronique (30) à un instant où un créneau actuel dans la seconde ressource de domaine temporel est en cours, si un créneau suivant du créneau actuel est un créneau de liaison montante ou un créneau flexible ;
lorsque le dispositif électronique (30) détermine que le créneau suivant du créneau actuel est le créneau de liaison montante ou le créneau flexible, la détermination, par le dispositif électronique, si des informations d'octroi UL correspondant au créneau suivant du créneau actuel sont reçues ; et
lorsque le dispositif électronique (30) détermine que les informations d'octroi UL correspondant au créneau suivant du créneau actuel sont reçues, la détermination, par le dispositif électronique, si le canal de transmission radiofréquence est occupé par le réseau correspondant à la première carte SIM, si le dispositif électronique envoie les données de liaison montante via la première carte SIM pendant le temps où le créneau actuel est en cours, et si le dispositif électronique envoie les données de liaison montante via la première carte SIM pendant le temps où le créneau suivant du créneau actuel est en cours.

8. Procédé selon la revendication 5 ou 7, **caractérisé en ce que** la détermination, par le dispositif électronique (30), d'effectuer ou non l'opération de commutation du canal de transmission radiofréquence comprend : la détermination, par le dispositif électronique à chaque créneau entrant, d'effectuer ou non l'opération de commutation du canal de transmission radiofréquence.

9. Procédé selon la revendication 1, **caractérisé en ce que** le temps du premier créneau est adjacent au temps du second créneau.

10. Procédé selon la revendication 9, dans lequel l'envoi (S407), par le dispositif électronique (30) dans un second créneau temporel de la seconde ressource dans le domaine temporel, de données de liaison montante vers le second dispositif de réseau d'accès (20) correspondant à la seconde carte SIM comprend spécifiquement :
lorsque le dispositif électronique (30) détermine de ne pas envoyer les données de liaison montante dans un troisième créneau temporel de la première ressource dans le domaine temporel, la commutation, par le dispositif électronique, du canal de transmission radiofréquence ; et
l'envoi, par le dispositif électronique (30) dans le second créneau temporel de la seconde ressource dans le domaine temporel, des données de liaison montante vers le second dispositif de réseau d'accès (20) correspondant à la seconde carte SIM, dans lequel
le temps du second créneau temporel est identique au temps du troisième créneau temporel.

11. Procédé selon la revendication 10, dans lequel le temps occupé par le dispositif électronique (30) pour commuter le canal de transmission radiofréquence est un intervalle de garde entre un dernier symbole dans le premier créneau temporel et un premier symbole dans le troisième créneau temporel.

12. Procédé selon la revendication 10, dans lequel le temps occupé par le dispositif électronique (30) pour commuter le canal de transmission radiofréquence correspond aux N premiers symboles dans le second créneau temporel ; et
l'envoi, par le dispositif électronique (30) dans le second créneau temporel de la seconde ressource dans le domaine temporel, des données de liaison montante vers le second dispositif de réseau d'accès (20) correspondant à la seconde carte SIM comprend spécifiquement :
l'envoi, par le dispositif électronique (30) sur les derniers (14-N) symboles dans le second créneau temporel, des données de liaison montante vers le second dispositif de réseau d'accès (20) correspondant à la seconde carte SIM, dans lequel N est inférieur à 14.

13. Procédé selon la revendication 1, dans lequel avant l'envoi (S404), par le dispositif électronique (30) dans un premier créneau temporel de la première ressource dans le domaine temporel, de données de liaison montante vers le premier dispositif de réseau d'accès (10) correspondant à la première carte SIM, le procédé comprend en outre :
l'obtention (S403), par le dispositif électronique (30), d'un point temporel auquel il existe deux créneaux de liaison descendante adjacents dans la première ressource dans le domaine temporel, et un second créneau de liaison descendante correspond à un créneau de liaison montante dans la seconde ressource dans le domaine temporel ; et/ou un point temporel auquel il existe deux créneaux de liaison descendante adjacents dans la première ressource dans le domaine temporel, et un second créneau de liaison descendante correspond à un créneau flexible dans la seconde ressource dans le domaine temporel ; et/ou un point temporel auquel la première ressource dans le domaine temporel est un symbole de non-liaison montante dans un créneau flexible, et la seconde ressource dans le domaine temporel est un symbole dans un créneau de liaison montante ; et/ou un point temporel auquel la première ressource dans le domaine temporel est un symbole de non-liaison montante dans un créneau flexible, et la seconde ressource dans le domaine temporel est un symbole de liaison montante dans le créneau flexible ;
le stockage, par le dispositif électronique (30), du point temporel obtenu en tant que premier index ; et
l'envoi (S407), par le dispositif électronique (30) dans un second créneau temporel de la seconde ressource de domaine temporel, de données de liaison montante vers le second dispositif de réseau d'accès (20) correspondant à la seconde carte SIM comprend spécifiquement :
lorsque le dispositif électronique (30) détermine qu'un point temporel où se situe le second créneau temporel existe dans le premier index, l'envoi, par le dispositif électronique dans le second créneau temporel de la seconde ressource de domaine temporel, des données de liaison montante vers le second dispositif de réseau d'accès (20) correspondant à la seconde carte SIM.

14. Dispositif électronique (30, 1000), comprenant un ou plusieurs processeurs (1001), une ou plusieurs mémoires (1004), un modem, un chemin de transmission radiofréquence (1002), une première carte SIM (1005) et une seconde carte SIM (1006), dans lequel les une ou plusieurs mémoires sont couplées au modem, les une ou plusieurs mémoires sont configurées pour stocker un code de programme informatique, et le code de programme informatique comprend des instructions informatiques ; et lorsque le modem exécute les instructions informatiques, le dispositif électronique est activé pour mettre en œuvre le procédé selon l'une quelconque des revendications 1 à 13.

15. Support de stockage lisible par ordinateur, comprenant des instructions informatiques, dans lequel, lorsque les instructions informatiques sont exécutées sur le dispositif électronique de la revendication 14, le dispositif électronique est activé pour mettre en œuvre le procédé selon l'une quelconque des revendications 1 à 13.
